(19) **Europäisches Patentamt**
**European Patent Office**
**Office européen des brevets**

(11) **EP 4 361 582 B1**

(12) **EUROPÄISCHE PATENTSCHRIFT**

(45) Veröffentlichungstag und Bekanntmachung des Hinweises auf die Patenterteilung:
**26.02.2025  Patentblatt 2025/09**

(21) Anmeldenummer: **22203357.3**

(22) Anmeldetag: **24.10.2022**

(51) Internationale Patentklassifikation (IPC):
**G01H 3/08** (2006.01)     **G01H 3/10** (2006.01)

(52) Gemeinsame Patentklassifikation (CPC):
**G01H 3/08; G01H 3/10**

(54) **VERFAHREN ZUR ZUSTANDSUNTERSUCHUNG BEI EINEM PUMPENAGGREGAT SOWIE SOFTWAREAPPLIKATION, SPEICHERMEDIUM UND UNTERSUCHUNGSGERÄT ZUR AUSFÜHRUNG DES VERFAHRENS**

METHOD FOR EXAMINING THE STATE OF A PUMP UNIT AND SOFTWARE APPLICATION, STORAGE MEDIUM AND EXAMINATION DEVICE FOR CARRYING OUT SAID METHOD

PROCÉDÉ D'INSPECTION DE L'ÉTAT D'UN GROUPE MOTOPOMPE AINSI QU'APPLICATION LOGICIELLE, SUPPORT DE STOCKAGE ET APPAREIL D'INSPECTION POUR LA MISE EN OEUVRE DU PROCÉDÉ

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**01.05.2024  Patentblatt 2024/18**

(73) Patentinhaber: **WILO SE**
**44263 Dortmund (DE)**

(72) Erfinder:
- **Schewalje, Alex**
  **44263 Dortmund (DE)**
- **Toews, Andreas**
  **44263 Dortmund (DE)**
- **Sen, Goekhan**
  **44263 Dortmund (DE)**
- **Räbiger, Klaus Edmund**
  **44263 Dortmund (DE)**

(74) Vertreter: **Cohausz Hannig Borkowski Wißgott Patentanwaltskanzlei GbR**
**Grafenberger Allee 337a**
**40235 Düsseldorf (DE)**

(56) Entgegenhaltungen:
EP-A1- 0 309 829          WO-A1-2015/197141
WO-A2-2007/023021      DE-A1- 102020 005 050
DE-A1- 19 749 372

**Beschreibung**

Die Erfindung betrifft ein Verfahren zur Untersuchung des Zustands wenigstens einer Komponente eines Pumpenaggregats insbesondere zur Bestimmung der Drehzahl des Pumpenaggregats oder bezüglich eines Fehlers durch Analyse des von dem Pumpenaggregat abgegebenen Luftschalls, umfassend das Aufzeichnen eines ersten Audiosignals im Betrieb des Pumpenaggregats an einem ersten geometrischen Ort mit einem ersten Abstand zum Pumpenaggregat und das Aufzeichnen eines zweiten Audiosignals im Betrieb des Pumpenaggregats an einem zweiten geometrischen Ort mit einem zweiten Abstand zum Pumpenaggregat, der geringer ist, als der erste Abstand.

Die spektrale Untersuchung der von Pumpenaggregaten ausgehenden Geräusche im Normalbetrieb oder im Falle eines fehlerhaften Zustands ist allgemein bekannt. Beispielsweise schlägt die deutsche Patentanmeldung DE102009022107 A1 vor, u.a. den Luftschall zu messen und daraus die Drehklangfrequenz mittels Signalanalyse, beispielsweise Frequenzanalyse, beispielsweise durch eine Fast-Fourier-Transformation (FFT) oder eine Autokorrelation zu ermitteln, woraus dann die Antriebsdrehzahl ermittelt wird.

Für akustische Messungen ist die Kenntnis des genauen Abstands zwischen der Geräuschquelle und des Mikrofons erforderlich, da der Schallpegel abstands- und ortsabhängig ist. Nur dadurch lassen sich ermittelte absolute Schallpegel (in Dezibel) untereinander vergleichen.

Für akustische Messungen wird in der Regel ein Abstand von 1m empfohlen. Geräuschpegel von Objekten in anderen Abständen können daraus analytisch errechnet werden. Zur Messung des genauen Abstands werden allgemein verfügbare, physische Messgeräte verwendet, die von dem akustischen Messgerät verschieden sind, wie z.B. Zollstock, Maßband oder Laser-Entfernungsmesser. Während das das Mikrofon umfassende akustische Messgerät auf einem Stativ montiert ist, wird manuell, gegebenenfalls mit zwei Händen, der Abstand gemessen und entsprechend eingestellt. Es versteht sich von selbst, dass diese Methode umständlich, zeitaufwändig und oft fehlerbehaftet ist.

Zur Fehleranalyse eines Pumpenaggregats werden charakteristische Vibrationsfrequenzen in dessen Spektrum untersucht. Akustische Untersuchungen sind in der Fachwelt allerdings umstritten. Vielmehr werden Vibrationssensoren bevorzugt, die am Pumpenaggregat montiert werden und deren Sensorsignal ausgewertet wird, so zum Beispiel in EP 1972793 A1 oder EP 3 563 062 B1.

Die internationale Anmeldung WO 2015/197141 A1 nennt es jedoch nachteilig und aufwändig, einen Vibrationssensor zu montieren, und schlägt als Alternative die Messung eines vom Pumpenaggregat ausgehenden, mit Hilfe eines Mikrofons in oder an einem Kommunikationshandgerät gemessenen Klangsignals vor, das anschließend verarbeitet und aus dem ein klangspezifischer Zustand oder Fehler identifiziert wird. Die Identifizierung erfolgt hier anhand eines Vergleichs mit zu dem konkreten Pumpenaggregat gespeicherten Referenzwerten, wobei zu Beginn des Untersuchungsverfahrens ein Modell in die Untersuchungssoftware geladen werden muss. WO 2015/197141 A1 schlägt vor, dem Benutzer auf einem Display zu zeigen, an welchen Positionen das Handgerät oder Mikrofon positioniert werden soll. Außerdem soll der Benutzer das Handgerät relativ zum Pumpenaggregat bewegen, d.h. näherbringen oder von diesem entfernen, nach rechts, links, oben oder unten schwenken, während die Untersuchungssoftware das empfangene akustische Signal in Echtzeit hinsichtlich Signalqualität und Amplitude bewertet und bei Erreichen einer optimalen Position eine Rückmeldung an den Benutzer gibt. Das Positionieren dauert hierbei zwischen 10 Sekunden und einer Minute und der Abstand liegt zwischen 5cm und einem Meter. Ist der Abstand als angemessen von der Untersuchungssoftware gemeldet, erfolgt in einem zweiten Schritt die eigentliche Geräuschmessung. Nachteilig ist hierbei, dass nicht sichergestellt ist, dass der als angemessen identifizierte Abstand identisch mit dem zuvor auf dem Display angezeigten und zu erwartenden Abstand ist. Das beschriebene Verfahren stößt außerdem an seine Grenzen, wenn die Pumpe aufgrund eines Fehlers besonders laut ist. Dies führt dazu, dass dem Nutzer ein falscher Abstand für die Audioaufnahme vorgeschlagen wird und damit dann eventuelle Fehler des Pumpenaggregats nicht erkannt werden. Darüber hinaus ist nicht sichergestellt, dass eine zuvor als angemessen identifizierte Position während der Messung eingehalten bleibt. So kann während der anschließend Messung unbeabsichtigt ein anderer Abstand vorliegen, insbesondere wenn das Handgerät in der Hand gehalten wird, zumal es zuvor hin- und hergeschwenkt wurde. Schließlich wird der tatsächliche Abstand des Handgeräts bzw. Mikrofons zum Pumpenaggregat in WO 2015/197141 A1 bei der Auswertung nicht weiter berücksichtigt und auch nicht gespeichert.

In EP 3563062 B1 wird das Verfahren aus WO 2015/197141 A1 als problematisch beschrieben, weil die Schallsignale auf die gleiche Weise erfasst werden müssen, damit die Daten verarbeitet werden können und brauchbare Ergebnisse erzielt werden. In der Praxis sei es jedoch nicht möglich, die Position des Handgeräts und die Umgebungsgeräusche mit ausreichender Genauigkeit zu beeinflussen, um die Methode sowohl zur Erkennung von Motorlagerfehlern als auch von Kavitation anzuwenden. Selbst wenn der Benutzer versucht, mehrere Messungen unabhängig voneinander vorzunehmen, wäre es sehr schwierig, wenn nicht gar unmöglich, Fehler im Motorlager und Kavitation zu erkennen und Kavitation zu erkennen. EP 3563062 B1 schlägt deshalb wieder die Verwendung eines Vibrationssensors vor.

Auch die WO 2016/059112 A beschreibt ein Verfahren zur akustischen Bestimmung des Zustands eines Pumpenaggregats, beispielsweise bei einer Heizungsumwälzpumpe. Zur Aufnahme kann ein übliches Smartphone verwendet werden, welches die akustischen Daten durch Signalverarbeitung aufbereitet und hinsichtlich auftretender Anomalien oder Fehlern untersucht. So können beispielsweise Lagerschäden oder Kavitation innerhalb der Pumpe erfasst werden. Der Vorteil dieser akustischen Fehleranalyse während des Betriebs des Pumpenaggregats liegt darin, dass ein Servicetechniker ohne besondere Sensorik oder einen aufwändigen Prüfaufbau das Pumpenaggregat während des laufenden Betriebs auf Fehler hin untersuchen kann. EP 3242036 A1 bezeichnet dieses Verfahren jedoch als nachteilig, weil es in geräuschbelastender Umgebung nicht oder zumindest nicht mit der erforderlichen Zuverlässigkeit durchgeführt werden könne. EP 3242036 A1 schlägt deshalb ein gänzlich anderes Verfahren vor, nämlich eine Videoanalyse, bei der die Geschwindigkeiten von Veränderungen zwischen Pixeln und Pixelgruppen aufeinanderfolgender Bilder einer Videosequenz ermittelt werden und die Ermittlung des Zustandes des Pumpenaggregats anhand der ermittelten Geschwindigkeiten von Änderungen erfolgt.

Es ist folglich ein ungelöstes Problem, den Zustand und/ oder einen etwaigen Fehler eines Pumpenaggregats durch Auswertung des von ihm abgegebenen Luftschalls mit hinreichender Genauigkeit zu bestimmen, wenn einerseits Umgebungsgeräusche vorhanden sind, und andererseits eine ungenaue Positionierung des Mikrofons relativ zum Pumpenaggregat möglich ist.

Es ist deshalb Aufgabe der vorliegenden Erfindung, ein Verfahren bereitzustellen, das die vorgenannten Nachteile überwindet und ein korrektes Ergebnis bei der Untersuchung des von dem Pumpenaggregat abgegebenen Luftschalls im Hinblick auf einen möglichen Fehler im Pumpenaggregat trotz vorhandener Geräusche einer Nebenschallquelle ermöglicht. Des Weiteren ist es Aufgabe der Erfindung, eine Softwareapplikation, ein computerlesbares Speichermedium und ein mobiles Untersuchungsgerät zur Durchführung des Verfahrens bereitzustellen. Zusätzlich soll die Positionierung des Untersuchungsgeräts relativ zum Pumpenaggregat erleichtert und das Untersuchungsergebnis unempfindlich gegen Abweichungen der tatsächlichen Messposition von einer vorgegebenen Messposition, insbesondere unabhängig von einer Vorgabe einer Messposition werden, so dass diese obsolet ist.

Diese Aufgaben werden durch das Verfahren gemäß Anspruch 1, die Softwareapplikation gemäß Anspruch 19, das Speichermedium nach Anspruch 20 und das Untersuchungsgerät nach Anspruch 21 gelöst. Vorteilhafte Weiterbildungen sind in den Unteransprüchen angegeben und werden nachfolgend erläutert.

Erfindungsgemäß wird ein Verfahren zur Untersuchung des Zustands wenigstens einer Komponente eines Pumpenaggregats insbesondere zur Bestimmung der Drehzahl des Pumpenaggregats oder bezüglich eines Fehlers durch eine Analyse des von dem Pumpenaggregat abgegebenen Luftschalls vorgeschlagen, umfassend das Aufzeichnen wenigstens eines ersten Audiosignals im Betrieb des Pumpenaggregats an einem ersten geometrischen Ort mit einem ersten Abstand zum Pumpenaggregat, und das Aufzeichnen eines zweiten Audiosignals im Betrieb des Pumpenaggregats an einem zweiten geometrischen Ort mit einem zweiten Abstand zum Pumpenaggregat, der geringer ist, als der erste Abstand, wobei die Bestimmung des Zustands des Pumpenaggregats durch Analyse eines von Nebengeräuschen wenigstens einer Nebenschallquelle bereinigten Signals des Pumpenaggregats erfolgt, das durch einen Vergleich von Amplitudenwerten des ersten und zweiten Audiosignals rekonstruiert wird.

Unter einem Pumpenaggregat wird im Sinne der vorliegenden Erfindung eine Anordnung aus einer eine Flüssigkeit fördernden Pumpeneinheit, insbesondere einer Kreiselpumpeneinheit, einer diese antreibenden Antriebseinheit wie z.B. ein Elektromotor verstanden. Zusätzlich kann eine Pumpenelektronik zur Steuerung und/ oder Regelung des Elektromotors vorhanden sein. Es kann alternativ auch nur ein Klemmenkasten mit elektrischen Anschlüssen des Elektromotors vorhanden sein. Die genannten Komponenten können baulich eine Einheit bilden oder lediglich funktional zusammenwirken, mithin verteilt angeordnet sein. So kann der Elektromotor die Pumpeneinheit direkt oder über eine Kupplung oder ein Getriebe antreiben. Im Falle eines Direktantriebs kann die Motorwelle gleichzeitig die Pumpenwelle sein und wenigstens ein Laufrad tragen. Die Pumpeneinheit kann einoder mehrstufig sein, d.h. ein oder mehr Laufräder besitzen. Es kann sich bei dem Pumpenaggregat um einen Trockenläufer oder einen Nassläufer handeln. Die Pumpenelektronik kann baulich am Gehäuse des Elektromotors montiert sein oder hierzu separat angeordnet sein.

Soweit im Sinne der vorliegenden Erfindung von einem Zustand die Rede ist, ist damit der Betriebszustand einer Komponente des Pumpenaggregats oder des gesamten Pumpenaggregats im Allgemeinen gemeint, d.h. ob das Pumpenaggregat oder die betrachtete Komponente aus akustischer Sicht innerhalb normaler Parameter, oder anders ausgedrückt, ohne eine besondere akustische Auffälligkeit arbeitet, oder ob eine solche akustische Auffälligkeit vorliegt, die auf einen Fehler hinweist. Im Besonderen kann unter dem Betriebszustand auch die momentane Drehzahl verstanden werden, bei der das Pumpenaggregat aktuell betrieben wird.

Als Fehler ist ein fehlerbehafteter Betriebszustand des Pumpenaggregats oder einer seiner Komponenten zu verstehen, der in akustischer Hinsicht zu wenigstens einer Auffälligkeit des vom Pumpenaggregat abgegebenen Luftschalls führt. Ein solcher Fehler ist beispielsweise ein Lagerschaden, genauer gesagt ein Schaden an einem Wälzlager oder Gleitlager, oder Kavitation, ein beschädigtes Laufrad, ein Schaden an einer Gleitringdichtung, eine Verstopfung, eine Unwucht an einem rotierenden Teil oder auch die Tatsache, dass eine oder mehrere Schrauben locker sind. All diese technischen Fehler führen zu bestimmten Vibrationen am Pumpenaggregat oder zumindest einer seiner Komponenten, die sich auch im Luftschall bemerkbar machen.

Die akustische Auffälligkeit und/ oder die Drehzahl können in bekannter Weise aus dem Frequenzspektrum des von dem Pumpenaggregat abgegebenen Luftschalls aufgrund des dortigen Vorhandenseins bestimmter Frequenzen bzw. Peaks erkannt, bzw. im Falle der Drehzahl geschätzt werden.

Das rekonstruierte Signal kann somit ein rekonstruiertes Frequenzspektrum sein. Es kann alternativ ein Spektrum anderer Art sein, beispielsweise ein Ordnungsspektrum für eine Ordnungsanalyse. Dies ermöglicht eine Analyse des Geräusches oder der Schwingungen von rotierenden Maschinen. Anders als bei der Frequenzanalyse repräsentiert hier die den Energiegehalt des Geräusches repräsentierende Amplitude nicht über der Frequenz, sondern über der Ordnung aufgetragen, wobei die Ordnung ein Vielfaches der Drehzahl ist. Es handelt sich insoweit um ein normiertes Spektrum. Das rekonstruierte Signal kann gemäß einer weiteren Alternative ein Zeitsignal sein, das aus einem zuvor rekonstruierten Spektrum zurücktransformiert worden ist.

Es wird zudem eine Softwareapplikation für ein mobiles Untersuchungsgerät mit einer Anzeige, wenigstens einem Bedienelement und einem akustischen Sensor und optional einem optischen Sensor vorgeschlagen, umfassend programmtechnische Anweisungen, die, wenn sie von dem Untersuchungsgerät ausgeführt werden, bewirken, dass das Untersuchungsgerät das erfindungsgemäße Verfahren ausführt.

Ferner betrifft die Erfindung ein computerlesbares Speichermedium mit einer solchen Softwareapplikation. Schließlich wird auch ein mobiles Untersuchungsgerät vorgeschlagen, mit einer Anzeige, wenigstens einem Bedienelement und einem akustischen Sensor zur Vornahme einer Audioaufnahme und optional einem optischen Sensor, wobei das Untersuchungsgerät eingerichtet ist, das erfindungsgemäße Verfahren auszuführen. Insbesondere kann das Untersuchungsgerät hierfür das vorgenannte Speichermedium enthalten und einen Prozessor umfassen, um die auf dem Speichermedium gespeicherte Softwareapplikation zur Durchführung des Verfahrens auszuführen.

Während die Bestimmung des Zustands des Pumpenaggregats bzw. die Analyse des vom Pumpenaggregat abgegebenen Luftschalls für die Zustandserkennung (Drehzahl oder Fehler) in dem Fachmann an sich bekannter Weise erfolgt, besteht ein Kerngedanke der Erfindung darin, von mindestens zwei, in verschiedenen Abständen zum Pumpenaggregat aufgenommenen Audiosignalen Amplitudenwerte einer physikalischen oder mathematischen Größe zu bestimmen und miteinander zu vergleichen und durch den Vergleich zu erkennen, welche Geräuschanteile vom Pumpenaggregat und welche nicht von diesem stammen, sondern von einer Nebenschallquelle, um dann ein Signal zu rekonstruieren, in dem die von dieser Nebenschallquelle ausgehenden Geräuschanteile eliminiert sind. Die erfindungsgemäße Vorgehensweise nutzt ein Abstandsgesetz, d.h. die Kenntnis, dass der vom Pumpenaggregat emittierte Luftschall am ersten Ort mit dem ersten Abstand zum Pumpenaggregat einen ersten Wert hat, der sich am zweiten Ort mit dem zweiten Abstand zum Pumpenaggregat naturgesetzlich zu einem bestimmten und damit zu erwartenden zweiten Wert geändert haben muss. Diese Prüfung auf Gültigkeit des Abstandsgesetzes kann dadurch erfolgen, dass die Amplitudenwerte einer Größe im ersten und zweiten Audiosignal miteinander verglichen werden und zwar im Hinblick darauf, ob sie in dem aufgrund des Abstandsgesetztes zu erwartendem Verhältnis stehen.

Der Luftschall wird mit Hilfe eines akustischen Sensors erfasst. Als akustische Größe des Luftschalls kann beispielsweise der Schalldruck gemessen werden, so dass das erste und zweite Audiosignal jeweils einen Schalldruck-Zeitverlauf bilden. Der Schalldruck ist eine skalare Größe, die dem Abstandsgesetz $1/r$ folgt, wobei $r$ der Abstand bzw. Radius zum Pumpenaggregat ist. Mit anderen Worten ist der Schalldruck $p$ zum Abstand $r$ umgekehrt proportional ($p \sim 1/r$). Daraus folgt, dass ein Schalldruck $p$ an einem ersten Ort $p(r_1)$ mit dem Abstand $r_1$ zu einem Bezugspunkt bei einer Verdoppelung des Abstands zum Bezugspunkt auf $r_2 = 2r_1$ nur noch den halben Wert hat, $p(r_2) = 0{,}5 \cdot p(r_1)$. Dies kann bei dem erfindungsgemäßen Vergleich der Amplitudenwerte berücksichtigt werden, um zu bestimmen, ob eine bestimmte Frequenz im Luftschall vom Pumpenaggregat stammt oder von der Nebenschallquelle.

Alternativ zum Schalldruck kann die Schalleistung oder die Schallintensität verwendet werden. Die Schalleistung und die Schallintensität sind energetische Größen, die jeweils dem Abstandsgesetz $1/r^2$ folgen, wobei $r$ wieder der Abstand bzw. Radius zum Pumpenaggregat ist. Mit anderen Worten ist die Schallintensität $I$ oder Schalleistung $P$ zum Quadrat des Abstand $r^2$ umgekehrt proportional ($I \sim 1/r^2$, $P \sim 1/r^2$). Daraus folgt, dass eine Schallintensität $I$ oder eine Schalleistung $P$ an einem ersten Ort mit Abstand $r_1$ zu einem Bezugspunkt bei einer Verdoppelung des Abstands zum Bezugspunkt auf $r_2 = 2r_1$ nur noch 25% des ursprünglichen Werts hat, $I(r_2) = 0{,}25 \cdot I(r_1)$, $P(r_2) = 0{,}25 \cdot P(r_1)$.

Sinnvollerweise ist oder wird der akustische Sensor zum Pumpenaggregat gerichtet. Als Sensor kann ein Mikrofon dienen, vorzugsweise ein Richtmikrofon oder ein ausrichtbares Mikrofon.

Sinnvollerweise sind der erste und der zweite Abstand signifikant anders. Dies bedeutet, dass sie sich nicht nur um wenige Millimeter oder wenige Zentimeter unterscheiden. Vielmehr sollte der erste Abstand mindestens 20%, vorzugsweise mindestens 50% größer als der zweite Abstand sein. Idealerweise ist der erste Abstand etwa doppelt so groß wie der zweite Abstand. Der Abstand sollte jedoch auch im Hinblick auf den Abstand zwischen dem Pumpenaggregat und der Nebenschallquelle gewählt werden, und im Vergleich zu diesem nicht zu groß sein.

Insbesondere sollte der erste Abstand kleiner als der Abstand zwischen dem Pumpenaggregat und der Nebenschallquelle sein.

Die Amplitudenwerte sind beispielsweise solche von aus dem ersten und zweiten Audiosignal ermittelten Spektralanteilen. Als Spektralanteil ist ein Anteil eines Spektrums zu verstehen, das eine Verteilungsfunktion der physikalischen oder mathematischen Größe in dem entsprechenden Audiosignal beschreibt. Ein Amplitudenwert beinhaltet somit die Information, mit welcher Quantität ein bestimmter Spektralanteil in dem entsprechenden Audiosignal vorhanden ist.

Gemäß einer Ausführungsvariante werden zur Eliminierung zumindest eines Nebengeräuschs in dem ersten und zweiten Audiosignal jeweils ein Spektrum des ersten und zweiten Audiosignals ermittelt. Anschließend können Amplitudenwerte von zueinander korrespondierenden Spektralanteilen der beiden Spektren oder davon abgeleiteter Spektren zueinander ins Verhältnis gesetzt werden, wobei das rekonstruierte Signal aus den Amplitudenwerten derjenigen Spektralanteile eines der beiden Spektren oder der davon abgeleiteten Spektren gebildet wird, deren Verhältnis jenseits eines bestimmten Grenzwerts liegen. Als Verhältnis kann der Quotient aus den genannten Amplitudenwerten verwendet werden.

Die Spektren können beispielsweise Frequenzspektren und die Spektralanteile Frequenzen sein.

Alternativ kann es sich bei den Spektren um Ordnungsspektren handeln, in denen die Spektralanteile Ordnungen sind, genauer gesagt Vielfache einer Drehzahl.

Vorzugsweise handelt es sich um diskrete Spektren, um deren numerische Berechnung und Auswertung zu ermöglichen.

Vorteilhaft ist es, wenn das rekonstruierte Signal aus den Amplitudenwerte der Spektralanteile des Spektrums des zweiten Audiosignals oder des davon abgeleiteten Spektrums gebildet wird, weil dieses näher am Pumpenaggregat aufgenommen wurde und somit das bessere Verhältnis zwischen dem Nutzsignal und Rauschen hat.

In einer vorteilhaften Weiterbildung können aus jedem der beiden Spektren zunächst eine Anzahl dominierender Spektralanteile bestimmt und selektiert werden, wobei diese dominierenden Spektralanteile samt ihren Amplitudenwerten das jeweilige abgeleitete Spektrum bilden, und anschließend das Setzen der Amplitudenwerte ins Verhältnis erfolgt. Mit anderen Worten entspricht das jeweilige abgeleitete Spektrum hinsichtlich der dominierenden Spektralanteile dem jeweiligen Spektrum der ersten bzw. zweiten Audioaufnahme, jedoch sind die Amplitudenwerte der übrigen Spektralanteile zu null gesetzt. Die dominierenden Spektralanteile können als "Peaks" im Spektrum bezeichnet werden. Bildlich gesprochen, wird durch die genannte Verfahrensweise das aus einzelnen Peaks bestehende Spektrum ausgedünnt. Hierdurch werden die durch Rauschen in den Audioaufnahmen bedingten Spektralanteile herausgefiltert. Ferner ist dadurch die nachfolgende Signalverarbeitung weniger rechenintensiv.

Die Anzahl X an dominierenden Spektralanteilen kann in einer Variante unbekannt sein. Beispielsweise kann die Bestimmung der dominierenden Spektralanteile durch einen Vergleich ihrer Amplitude mit einem Grenzwert erfolgen, so dass all diejenigen Spektralanteile dominierend sind, die diesen Grenzwert überschreiten. Wie viele das sind, kann in diesem Fall zu Beginn der Bestimmung nicht gesagt werden.

In einer anderen Variante kann die Anzahl N zu selektierender dominierender Spektralanteile allerdings vorgegeben sein oder werden. In diesem Fall sind die selektierten Frequenzen jene, die zu den N Spektralanteilen mit der höchsten Amplitude gehören. Gegenüber der Verwendung eines Grenzwerts führt diese Variante zu einer besseren Herausfilterung von Rauschen.

Die Vorgabe einer Anzahl N zu selektierender dominierender Spektralanteile kann sich global auf das gesamte Spektrum beziehen, der sich beispielsweise im Falle eines Frequenzspektrums zwischen 0 und 20 kHz erstrecken kann. Da sich das Verhältnis aus Nutzsignal und Rauschen in unterschiedlichen Bereichen des Spektrums (Frequenzbändern) unterschiedlich darstellt, ist es von Vorteil, wenn das Spektrum in m Intervalle eingeteilt und eine Anzahl $N_{I,peak}$ dominierender Frequenzen in jedem Intervall $I_x$ mit x = 1 bis m individuell bestimmt wird. Dabei kann die Anzahl $N_{I,peak}$ für alle Intervalle gleich sein oder aber verschieden, insbesondere individuell festgelegt sein. Dies hat den Vorteil, dass das Gesamtspektrum in mehr und weniger interessierende Teilbereiche unterteilt werden kann. Die Interessierenden Teilbereiche können solche sein, in denen bekanntermaßen Frequenzen liegen, die durch Fehler am Pumpenaggregat hervorgerufen bzw. erzeugt werden. Für diese interessanten Teilbereiche kann eine höhere Anzahl $N_{I,peak}$ dominierender Frequenzen verwendet werden, als bei den übrigen Teilbereichen.

Beispielsweise kann das Gesamtspektrum in 2 bis 20 Teilbereiche geteilt werden. Die Teilbereiche können gleiche oder unterschiedliche spektrale Breiten haben. Im Falle eines Frequenzspektrums von 0 bis 20kHz, kann jeder Teilbereich bzw. jedes Intervall bei beispielsweise 10 Intervallen eine spektrale Breite (Bandbreite) von 2kHz aufweisen. Für jedes Intervall kann die Anzahl $N_{I,peak}$ beispielsweise zwischen 50 und 500 betragen. Im Falle von 500 selektierten Spektralanteilen wird somit ein Intervall mit 2000 diskreten Spektralanteilen (z.B. 2 kHz Intervallbreite) bereits zu 75% ausgedünnt. Bei 100 selektierten Spektralanteilen wird das Spektrum sogar um 95% ausgedünnt, was die Rechenleistung für die folgende Auswertung erheblich reduziert.

Die Bestimmung der dominierenden Spektralanteile kann durch Anwendung eines Sortieralgorithmusses erfolgen. Dabei können die Spektralanteile gemäß ihrer Amplitude sortiert werden, wobei die $N_{peak}$ oder $N_{I,peak}$ Spektralanteile mit den größten Amplituden selektiert werden.

Bevorzugt erfolgt die Bestimmung der dominierenden Spektralanteile derart, dass

a) zunächst alle Spektralanteile nacheinander daraufhin geprüft werden, welcher Spektralanteil die höchste Amplitude besitzt,
b) anschließend die verbleibenden Spektralanteile nacheinander daraufhin geprüft werden, welcher dieser Spektralanteile die höchste Amplitude besitzt, und

c) Schritt b) $N_{peak}$ -2 Mal wiederholt wird, wobei $N_{peak}$ die Anzahl dominierender Spektralanteile ist.

Dieses Verfahren kann für das Gesamtspektrum als Ganzes oder bevorzugt für jedes Intervall $I_x$ des entsprechenden Spektrums durchgeführt werden. In letzterem Fall sind die Schritte a) bis c) auf die Spektralanteile innerhalb eines Intervalls $I_x$ bezogen und werden nacheinander für jedes Intervall $I_x$ durchgeführt.

Beispielsweise werden in jedem Intervall $I_x$ die diskreten Spektrallinien des Spektrums gemäß einer absteigenden oder aufsteigenden Amplitude nach sortiert. Die dominierenden Spektralanteile eines Intervalls $I_x$ sind diejenigen Linien (Peaks) mit den $N_{I,peak}$ größten Amplituden. Während die Linien der dominierenden Spektralanteile an ihren Positionen verbleiben, werden alle anderen Spektrallinien aus dem Spektrum entfernt. Somit wurde das Spektrum ausgedünnt. Das resultierende Spektrum bildet das abgeleitete Spektrum.

Schrittweise betrachtet, können in dem Fall einer intervallbezogenen Bestimmung der dominierenden Spektralanteile die folgenden Schritte durchgeführt werden:

a) für ein erstes Intervalls $I_i$:

a1) zunächst alle Spektralanteile des ersten Intervalls $I_i$ nacheinander daraufhin geprüft werden, welcher Spektralanteil die höchste Amplitude besitzt,

b1) anschließend die verbleibenden Spektralanteile des ersten Intervalls $I_1$ nacheinander daraufhin geprüft werden, welcher dieser Spektralanteile die höchste Amplitude besitzt, und

c1) Schritt b1) $N_i$ -2 Mal wiederholt wird, wobei $N_i$ die Anzahl dominierender Spektralanteile in dem ersten Intervalls $I_i$ ist,

b) für ein nächstes Intervalls $I_{i+1}$:

a2) zunächst alle Spektralanteile des nächsten Intervalls $I_{i+1}$ nacheinander daraufhin geprüft werden, welcher Spektralanteil die höchste Amplitude besitzt,

b2) anschließend die verbleibenden Spektralanteile des nächsten Intervalls $I_{i+1}$ nacheinander daraufhin geprüft werden, welcher dieser Spektralanteile die höchste Amplitude besitzt, und

c2) Schritt b2) $N_{i+1}$ -2 Mal wiederholt wird, wobei $N_{i+1}$ die Anzahl dominierender Spektralanteile in dem nächsten Intervalls $I_{i+1}$ ist, und

c) Schrittfolge b) m -2 Mal wiederholt wird, wobei m die Anzahl an Intervallen $I_x$ ist. Somit werden für alle Intervalle $I_x$ nacheinander die dominierenden Spektralanteile bestimmt.

Wie bereits erwähnt, kann die Anzahl $N_i$ bzw. $N_{I,peak}$ dominierender Spektralanteile für alle Intervalle gleich oder für alle Intervalle einzeln festgelegt und gegebenenfalls von Intervall zu Intervall verschieden sein. Somit können in einem ersten Intervall mehr dominierende Spektralanteile bestimmt werden, als in einem anderen Intervall. Dies ermöglicht eine Berücksichtigung frequenzband-spezifischer Besonderheiten des Luftschalls des Pumpenaggregats. So kann beispielsweise in jenen Intervallen, in denen sich bekannterweise bestimmte mechanische Fehler am Pumpenaggregat in spektralen Anteilen im Spektrum zeigen, eine höhere Anzahl dominierender Spektralanteile bestimmt werden, als in anderen Intervallen, in denen das nicht der Fall ist, bzw. in denen überwiegend Rauschen auftritt. In solchen Intervallen kann die Anzahl dominierender Spektralanteile entsprechend kleiner gewählt sein.

Es sei noch einmal erwähnt, dass die oben genannten Schritte a)-c) zur Bestimmung der dominierenden Spektralanteile für die Spektren aller Audiosignale durchgeführt wird.

Vorzugsweise erfolgt die Bildung der Amplitudenverhältnisse derart, dass für einen Spektralanteil ein Verhältnis des Amplitudenwerts des Spektralanteils im Spektrum des zweiten Audiosignals oder im davon abgeleiteten Spektrum zum Amplitudenwert des korrespondierenden Spektralanteils im Spektrum des ersten Audiosignals oder im davon abgeleiteten Spektrum berechnet wird. Als Verhältnis kann auch hier der Quotient aus den genannten Amplitudenwerten verwendet werden.

Somit sollte stets der betraglich höhere Amplitudenwert im Zähler stehen, das Verhältnis also größer 1 sein. Die Verhältnisse können auch als Peak-Faktoren bezeichnet werden.

Genau betrachtet, kann die Bildung der Amplitudenverhältnisse in einer Ausführungsvariante derart erfolgen, dass für einen Spektralanteil $f_k$ das Verhältnis $F_k$ des Amplitudenwerts dieses Spektralanteils $f_k$ im Spektrum des zweiten Audiosignals oder im davon abgeleiteten Spektrum zum Amplitudenwert desselben Spektralanteils $f_k$ im Spektrum des ersten Audiosignals oder im davon abgeleiteten Spektrum berechnet wird. Dies wird dann für jeden oder zumindest für jeden selektierten Spektralanteil $f_k$ durchgeführt.

Wird von einem Spektralanteil das Verhältnis der Amplitudenwerte aus dem zweiten zum ersten Audiosignal gebildet, ist es zur Vermeidung einer Division durch null vorteilhaft, die vorgenannte Berechnungsvorschrift nur dann anzuwenden, wenn beide genannten Amplitudenwerte größer null sind. Das Verhältnis kann gleich null gesetzt werden, wenn einer der beiden Amplitudenwerte gleich null ist. Alternativ könnte jedoch auch ein Datenvektor, der alle Verhältnisse $F_k$ enthält, vor der Berechnung der Verhältnisse mit null initialisiert werden.

Werden nur die $N_{peak}$ dominierenden Spektralanteile verwendet, ist die Nullabfrage nicht unbedingt erforderlich, da die Amplituden dieser Spektralanteile stets größer null sind. Die numerische Abarbeitung des vorliegenden Verfahrens ist jedoch einfacher, wenn die Verhältnisbildung nacheinander für alle $N_{total}$ Spektralanteile $f_k$ erfolgt, mit k als Laufindex von 0 bis $N_{total}$ -1.

Von Fall zu Fall führen akustische Messungen, die zu unterschiedlichen Zeitpunkten erfolgen, nicht immer zu exakt identischen Spektren, selbst wenn die Quelle unverändert dasselbe oder dieselben Geräusche abgibt. Daraus folgt, dass ein dominierender Spektralanteil bei der zweiten Messung bzw. dem zweiten Audiosignal nicht unbedingt am selben spektralen Ort, genauer gesagt beim selben Index k des diskreten Spektrums liegt, wie bei der ersten Messung bzw. dem ersten Audiosignal. Es kann somit ein spektraler Offset zwischen der ersten und der zweiten Audioaufnahme existieren. Ein solcher spektraler Offset ist umso wahrscheinlicher, je feiner der spektrale Abstand, d.h. die Auflösung der Spektralanteile in den Spektren der Audiosignale gewählt wird. Bei niedriger Auflösung wird somit mit hoher Wahrscheinlichkeit kein spektraler Offset vorliegen und es können die Amplitudenwerte desselben Spektralanteils $f_k$ im Spektrum des ersten und zweiten Audiosignals ins Verhältnis zueinander gesetzt werden. Bei höherer Auflösung ist dagegen ein Offset möglich und zu berücksichtigen.

Es kann deshalb gemäß einer bevorzugten Ausführungsvariante vorgesehen sein, dass bei der Bildung der Amplitudenverhältnisse eine Offset-Korrektur durchgeführt wird, indem

a. für den Spektralanteil $f_k$ das Verhältnis $F_k$ des Amplitudenwerts des Spektralanteils $f_k$ im Spektrum des zweiten Audiosignals oder im davon abgeleiteten Spektrum zum Amplitudenwert desselben Spektralanteils $f_k$ im Spektrum des ersten Audiosignals oder im davon abgeleiteten Spektrum berechnet wird, wenn beide genannten Amplitudenwerte größer null sind, oder

b. für den Spektralanteil $f_k$ das Verhältnis $F_k$ des Amplitudenwerts des Spektralanteils $f_k$ im Spektrum des zweiten Audiosignals oder im davon abgeleiteten Spektrum zum Amplitudenwert des vorherigen Spektralanteils $f_{k-1}$ im Spektrum des ersten Audiosignals oder im davon abgeleiteten Spektrum berechnet wird, wenn beide genannten Amplitudenwerte größer null sind, oder

c. für den Spektralanteil $f_k$ das Verhältnis $F_k$ des Amplitudenwerts des Spektralanteils $f_k$ im Spektrum des zweiten Audiosignals oder im davon abgeleiteten Spektrum zum Amplitudenwert des nächsten Spektralanteils $f_{k+1}$ im Spektrum des ersten Audiosignals oder im davon abgeleiteten Spektrum berechnet wird, wenn beide genannten Amplitudenwerte größer null sind.

Als Verhältnis kann auch hier der Quotient aus den genannten Amplitudenwerten verwendet werden.

In den vorgenannten Fällen wird das zweite Audiosignal, d.h. das "Nah-Spektrum", als Referenz verwendet, da dessen Amplitudenwerte im Zähler stehen. Selbstverständlich kann alternativ auch die erste Audioaufnahme als Referenz verwendet werden.

Im Fall a. besteht kein spektraler Offset zwischen den Peaks im Nah- und FernSpektrum. Im Fall b. liegt bei dem Spektralanteil $f_k$ ein spektraler Offset des Fern-Spektrums nach oben vor, d.h. der einem Spektralanteil $f_k$ im Nah-Spektrum korrespondierende Spektralanteil im Fern-Spektrums ist in Höhe der spektralen Auflösung $\Delta f = f_{k+1} - f_k$ der betrachteten Spektren zum nächst höheren Indexwert k+1 verschoben, so dass für eine korrekte Bildung des Amplitudenverhältnisses der Index des Spektralanteils im Fern-Spektrums um 1 verringert werden muss. Mit anderen Worten korrespondiert ein Peak bei dem Spektralanteil $f_k$ des zweiten Audiosignals (Nah-Spektrum) mit einem Peak bei dem Spektralanteil $f_{k-1}$ des ersten Audiosignals (Fern-Spektrum). Im Fall c. liegt bei dem Spektralanteil $f_k$ ein spektraler Offset des Fern-Spektrums nach unten vor, d.h. der dem Spektralanteil $f_k$ des Nah-Spektrums korrespondierende Spektralanteil des Fern-Spektrums ist in Höhe der spektralen Auflösung $\Delta f = f_{k+1} - f_k$ der betrachteten Spektren zum nächst niedrigeren Indexwert k-1 verschoben, so dass für eine korrekte Bildung des Amplitudenverhältnisses der Index des Spektralanteils im Fern-Spektrums um 1 erhöht werden muss. Mit anderen Worten korrespondiert ein Peak bei dem Spektralanteil $f_k$ des zweiten Audiosignals (Nah-Spektrum) mit einem Peak bei dem Spektralanteil $f_{k+1}$ des ersten Audiosignals (Fern-Spektrum).

Ist keiner der genannten drei Fälle a., b. oder c. für den Spektralanteil $f_k$ erfüllt, d.h. jeweils einer der beiden ins Verhältnis zu setzenden Amplitudenwerte null, kann das Verhältnis $F_k$ auf den Wert null gesetzt werden. Alternativ hierzu kann ein die Verhältnisse $F_k$ aller Spektralanteile $f_k$ umfassender Datenvektor vor der Verhältnisbildung mit null initialisiert werden. Somit ist das Verhältnis $F_k$ bereits null, wenn keiner der genannten drei Fälle a., b. oder c. für den Spektralanteil $f_k$ erfüllt ist. Ist dagegen einer der genannten drei Fälle a., b. oder c. für den Spektralanteil $f_k$ erfüllt, wird der mit null vorinitialisierte Wert für das Verhältnis $F_k$ durch den berechneten Wert des Verhältnisses $F_k$ ersetzt.

Ein gleichzeitiges Eintreten mehrerer Fälle a., b., c. wird durch die vorherige Selektion der dominanten Spektralanteile vermieden, weil dabei die Amplituden der meisten Spektralanteile zu null gesetzt werden. Es können jedoch auch eine oder mehrere Regeln aufgestellt, die das gleichzeitige Eintreten mehrerer Fälle behandeln. Zum Beispiel kann beim Eintreten mehrerer Fälle a., b., c. das größte Verhältnis $F_k$ aus den Fällen verwendet werden.

Bevorzugt wird nach der Bildung der Verhältnisse, gegebenenfalls nach der Offsetkorrektur, geprüft, bei welchem Spektralanteil das hierzu ermittelte Amplitudenverhältnis über dem Grenzwert liegt. Diese Prüfung erfolgt vorzugsweise für alle Spektralanteile , zumindest für die selektierten Spektralanteile nacheinander. Diejenigen Spektralanteile, bei denen diese Bedingung, d.h. dass das hierzu ermittelte Amplitudenverhältnis über dem Grenzwert liegt, erfüllt ist, samt den diesen Spektralanteilen zugeordneten Amplitudenwerte aus dem Spektrum des zweiten Audiosignals bilden dann das rekonstruierte Signal in Gestalt eines rekonstruierten Spektrums.

Idealerweise ist der Grenzwert unter Berücksichtigung eines Verhältnisses der beiden Abstände zueinander festgelegt. Somit kann in dem Grenzwert das obengenannte Abstandsgesetzt Berücksichtigung finden, das je nach erfasster akustischer Größe gilt. Wird also der Schalldruck als akustische Größe erfasst, so kann der Grenzwert derart festgelegt sein, dass er ein proportionales Verhältnis des ersten Abstands zum zweiten Abstand widerspiegelt. Wird die Schallleistung oder die Schallenergie als akustische Größe erfasst, so kann der Grenzwert derart festgelegt sein, dass er ein quadratisches Verhältnis des ersten Abstands zum zweiten Abstand widerspiegelt.

Sind für die Durchführung des erfindungsgemäßen Verfahrens der erste und der zweite Abstand vorgegeben oder ist das Verhältnis zwischen dem ersten und zweiten Abstand vorgegeben, so ist der Grenzwert ebenfalls bekannt und festgelegt, und kann als Konstante in der Softwareapplikation hinterlegt sein.

Wie bereits angemerkt, kann beispielsweise vorgesehen sein, dass der zweite Abstand die Hälfte des ersten Abstands beträgt, wobei diese Abstände als Vorgabewerte eingehalten werden sollten. Der Grenzwert kann in diesem Fall bei Verwendung des Schalldrucks den Wert 2 oder bei der Verwendung der Schallleistung oder der Schallenergie den Wert 4 haben.

Wird dagegen zugelassen, dass das erste und/ oder das zweite Audiosignal in einem selbstgewählten Abstand aufgenommen werden, oder soll überprüft werden, ob ein vorgegebener Abstand während der ersten und/ oder zweiten Aufzeichnung tatsächlich auch besteht, so sind der erste und zweite Abstand zu messen. Der Grenzwert $F_{Schwelle}$ kann in diesem Fall aus den ermittelten Messwerten berechnet werden, z.B. im Falle des Schalldrucks aus dem Verhältnis aus dem ersten zum zweiten Abstand: $F_{Schwelle}=D_{fern}/D_{nah}$. Der Grenzwert ist in diesem Fall folglich variabel und wird stets aus den ermittelten Abständen $D_{fern}$, $D_{nah}$ neu bestimmt. Im Falle der Schallintensität oder der Schallenergie kann das Verhältnis wie folgt aus dem ersten zum zweiten Abstand berechnet werden aus: $F_{Schwelle} = (D_{fern}/D_{nah})^2$.

Bevorzugt kann der Grenzwert mit einem Faktor zwischen 0,6 und 1, vorzugsweise 0,8 und 1 gewichtet werden. Dies berücksichtigt Messungenauigkeiten und verhindert, dass ein zum Pumpenaggregat gehörender spektraler Anteil aufgrund dieser Messungenauigkeiten unberücksichtigt bleibt.

Um die Genauigkeit des Verfahren zu verbessern, ist es von Vorteil, wenn der erste geometrische Ort, der zweite geometrische Ort und das Pumpenaggregat auf einer geraden Messlinie liegen. Ferner ist es sinnvoll, wenn die Messlinie rechtwinklig zu einer Verbindungslinie zwischen dem Pumpenaggregat und der Nebenschallquelle liegt, da die Messlinie in diesem Fall nahezu tangential zum Schallfeld der Nebenschallquelle liegt. Optimal ist es allerdings, wenn der erste geometrische Ort und der zweite geometrische Ort auf einer Kreisbahn um die Nebenschallquelle liegen.

Es sei angemerkt, dass das im Rahmen der vorliegenden Beschreibung vorgeschlagene Verfahren Grenzen hat. So ist für eine bestmögliche Eliminierung der Nebengeräusche im aufgezeichneten Audiosignal und für eine zuverlässige und korrekte Bestimmung des Zustands des Pumpenaggregats vorauszusetzen, dass das Pumpenaggregat und die Nebenschallquelle(n) im Vergleich zu den Messabständen $D_{fern}$, $D_{nah}$ einen hinreichend großen Abstand zueinander haben. Ist das nicht der Fall, wird das Ergebnis der Eliminierung und folgemäßig der Zustandserkennung verschlechtert.

Ferner sollte der Betriebszustand des Pumpenaggregats bei der Aufzeichnung des ersten und zweiten Audiosignals gleich sein und sich auch während der Aufzeichnung nicht ändern, damit das Verfahren eine hohe Qualität erreicht.

Wie bereits erwähnt, besteht eine weitere Verbesserung des erfindungsgemäßen Verfahrens darin, zumindest eine weitere Messung vorzunehmen, d.h. ein drittes Audiosignal zu erfassen, und zwar in einem dritten Abstand zum Pumpenaggregat, der größer als der zweite Abstand ist, aber vorzugsweise kleiner als der erste Abstand ist. Der dritte Abstand liegt also zwischen dem ersten und dem zweiten Abstand. Alle zuvor in Bezug auf das erste und zweite Audiosignal beschriebenen Verfahrensschritte können entsprechend auf das dritte und zweite Audiosignal angewendet werden. So können auch deren Amplitudenwerte ins Verhältnis gesetzt werden, so dass auch hier für jeden Spektralanteil $f_k$ ein Amplitudenverhältnis des dritten Audiosignals zum zweiten Audiosignal berechnet werden kann. Dieses jeweilige Amplitudenverhältnis kann dazu verwendet werden, eine aus dem spektralen Vergleich des zweiten Audiosignals mit dem ersten Audiosignal resultierende Annahme zu überprüfen, dass ein bestimmter Spektralanteil $f_k$ tatsächlich zu dem zu untersuchenden Pumpenaggregat 1 gehört. Liegt ein aus dem ersten und zweiten Audiosignal für einen bestimmten Spektralanteil $f_k$ berechnetes Amplitudenverhältnis $F_k$ jenseits des Grenzwerts $F_{Schwelle}$, so dass dieser Spektralanteil ein potentieller Kandidat für einen vom Pumpenaggregat stammenden Spektralanteil ist, kann aus dem dritten und zweiten Audiosignal für den Spektralanteil $f_k$ ein weiteres Amplitudenverhältnis berechnet werden, das dann ebenfalls mit einem Grenzwert verglichen wird, um die Annahme zu verifizieren. Dieser Grenzwert ist dann durch das Verhältnis des dritten Abstands zum zweiten Abstand gebildet, gegebenenfalls ebenfalls gewichtet mit einem Faktor zwischen 0,6 und 1. Nur wenn auch diese Bedingung erfüllt ist, kann davon ausgegangen werden, dass der Spektralanteil $f_k$ ein vom Pumpenaggregat stammender Spektralanteil ist.

In gleicher Weise kann mit weiteren Messpositionen verfahren werden, die optional möglich sind.

Gemäß einer besonders vorteilhaften Weiterbildung der Erfindung werden die Abstände jeweils durch eine optische Messung ermittelt, indem das Pumpenaggregat mit Hilfe eines optischen Sensors jeweils vom ersten und zweiten geometrischen Ort aus erfasst wird. Bei dem optischen Sensor kann es sich beispielsweise um eine Laser-Distanz-Messeinrichtung handeln, die mittels einem Laserstrahl und einer Laufzeitmessung den Abstand zwischen dem Untersuchungsgerät und dem Pumpenaggregat ermittelt.

Alternativ kann der optische Sensor eine Kamera sein, mit der das Pumpenaggregat in wenigstens einem Bild visuell erfasst wird, wobei dieses Bild, vorzugsweise in Echtzeit, ausgewertet wird. Die in der Beschreibungseinleitung genannten Nachteile der aufwändigen Auffindung einer angemessenen Position des Handgeräts bzw. Mikrofons anhand einer Echtzeitbewertung des akustischen Signals hinsichtlich Signalqualität und Amplitude, werden durch die vorgeschlagene optische Abstandsmessung überwunden. Sie ist ein objektiver Indikator, um den richtigen Abstand für die Audioaufzeichnung zu verwenden. So wird der Nutzer in die Lage versetzt, das Untersuchungsgerät in einen vorgegebenen Abstand zum Pumpenaggregat zu bringen und die Audiosignale somit jeweils in korrektem Abstand aufzunehmen.

Der Nutzer muss außerdem keine mehrfachen Aufnahmen durchführen, um einen Fehler im Pumpenaggregat zu detektieren. Es bedarf für eine korrekte Abstandseinstellung außerdem keiner zusätzlichen Messwerkzeuge wie Zollstock oder Maßband. Ferner kann die Messung mit einer Hand erfolgen, in der das Untersuchungsgerät gehalten wird. Allerdings kann das Untersuchungsgerät auch auf einem Stativ montiert sein. Auf diese Weise wird ein einfaches und benutzerfreundliches Verfahren zur Abstandmessung für eine, insbesondere während einer akustischen Vermessung eines Pumpenaggregats geboten.

Die visuelle Messung kann in bekannter Weise nach dem Stand der Technik erfolgen. Verfahren zur Bestimmung eines räumlichen Abstands von einer Kamera zu einem von dieser erfassten Gegenstand sind an sich bekannt. Hier wird auf die einschlägige Literatur verwiesen, beispielsweise auf EP 2669707 A1, WO 2015/144775 A1, US 2011/0025845 A1, US 2021/0254962 A1, US 2019/0340799 A1, EP 326249 9B1 oder US 10489033 B2.

Gemäß einer Ausführungsvariante erfolgt die optische, insbesondere visuelle Messung zeitgleich zur Aufzeichnung des jeweiligen Audiosignals. Somit ist dem Untersuchungsgerät der Abstand, den es im Zeitpunkt der Aufzeichnung des jeweiligen Audiosignals jeweils hatte, bekannt.

Beispielsweise kann die Abstandsmessung vor, nach oder während einer Aufzeichnung erfolgen. Es ist ferner möglich, dass die Abstandsmessung mehrfach, insbesondere fortlaufend während der jeweiligen Aufzeichnung durchgeführt wird. Von Vorteil ist es, wenn der Abstand zwei Mal bestimmt wird, beispielsweise erstmalig beim Start oder vor der Aufzeichnung und ein weiteres Mal am Ende oder nach der Aufzeichnung. Dies hat den Vorteil, dass anhand des zweiten erfassten Abstands kontrolliert werden kann, ob sich der Abstand während der Aufzeichnung gegenüber dem ersten erfassten Abstand nicht wesentlich verändert hat. Für das weitere Verfahren kann der erste erfasste Abstand verwendet werden.

Die Dauer der Aufzeichnung kann beispielsweise zwischen 5 Sekunden und 20 Sekunden, vorzugsweise 10 Sekunden betragen.

Idealerweise wird der jeweils ermittelte Abstand dem entsprechenden Audiosignal, insbesondere der entsprechenden Audioaufnahme zugeordnet abgespeichert, beispielsweise in Form sogenannter Metadaten.

Ist der Abstand ermittelt, kann er auf der Anzeige des Untersuchungsgeräts angezeigt werden, insbesondere während die jeweilige Aufzeichnung erfolgt.

Gemäß einer vorteilhaften Weiterbildung kann ein Abbruchkriterium angewendet werden, wonach die Aufzeichnung abbricht, wenn während der Aufzeichnung eine Änderung des Abstands von mehr als 3 %, vorzugsweise mehr als 5% stattfindet. Der Nutzer kann in diesem Fall durch einen entsprechenden Hinweis am Untersuchungsgerät gebeten werden, die Hand ruhig zu halten.

Während der visuellen Abstandsmessung kann das aufgenommene Bild auf der Anzeige des Untersuchungsgeräts angezeigt werden. Dabei können auch die Referenzpunkte in das Bild eingetragen und angezeigt werden, beispielsweise durch farblich gekennzeichnete Kreise, die das Pumpenaggregat überlagern. Dies kann als "Augmented-Reality Messung" (AR-Messung) bezeichnet werden. Außerdem kann der aus dem aufgenommenen Bild ermittelte Abstand auf der Anzeige des Untersuchungsgeräts angezeigt werden, beispielsweise in Form einer numerischen Angabe.

Vorzugsweise wird der Grenzwert aus dem Verhältnis der beiden ermittelten Abstände berechnet. Dies hat den Vorteil, dass ein zeitaufwendiges Positionieren des Untersuchungsgeräts in einem bestimmten, vorgegebenen Abstand zum Pumpenaggregat entfallen kann. Das erste und zweite Audiosignal können somit jeweils aus einem grundsätzlich beliebigen Abstand aufgenommen werden. Gleichwohl können natürlich Abstände weiterhin als Richtwerte empfohlen werden, wie z.B. 25cm und 50cm, 30cm und 60cm, 40 und 80cm, usw.

Das mobile Untersuchungsgerät kann ein-, zwei- oder mehrteilig sein. Vorzugsweise ist die Softwareapplikation auf das Untersuchungsgerät, insbesondere auf eine Zentralkomponente mit wenigstens einem Prozessor und wenigstens einem Datenspeicher (RAM, EEPROM) geladen bzw. zu ihrer Ausführung installiert. In einer Ausführungsvariante kann/ können der akustische Sensor und/ oder der optische Sensor einen integralen Bestandteil des Untersuchungsgeräts bilden. Ideal ist es, wenn das Untersuchungsgerät ein Smartphone, ein Tablet-Computer oder ein Laptop ist, da diese Geräte regelmäßig mit integrierten Kameras und Mikrofonen ausgestattet sind.

Der optische Sensor und/ oder der akustische Sensor können jedoch auch ein zur Zentralkomponente separates Teil sein, genauer gesagt mit einem eigenen Gehäuse, das mit der Zentralkomponente datentechnisch verbunden ist, beispielsweise über ein Kabel oder per Funk. In diesem Fall bilden das Smartphone, der Tablet-Computer oder das Laptop die Zentralkomponente. Dies hat den Vorteil, dass ein besseres als das in der Zentralkomponente integrierte Mikrofon, beispielsweise mit einer besonderen Richtcharakteristik verwendet werden kann, und/ oder dass eine bessere als die in der Zentralkomponente integrierte Kamera, beispielsweise mit einer höheren Auflösung, oder ein anderer optischer Sensor für die Abstandsmessung verwendet werden kann. Sind der optische und/ oder der akustische Sensor jeweils an die Zentralkomponente angeschlossene Geräte, bilden diese gemeinsam das Untersuchungsgerät, dass in dieser Ausführungsvariante dreiteilig ist.

In einer bevorzugten Ausführungsvariante besteht das Untersuchungsgerät aus einem Smartphone und einem Gehäuse mit einer das Smartphone haltenden Halterung, wobei in dem Gehäuse wenigstens ein akustischer Sensor zur Aufnahme der Audioaufnahmen integriert ist, der über eine in der Halterung integrierte Schnittstelle mit dem Smartphone datentechnisch verbindbar ist. Die Schnittstelle kann eine mechanisch, elektrische Schnittstelle sein, die beim Einsetzen des Smartphones in die Halterung kontaktiert wird, so dass bei diesem Einsetzen gleichzeitig die Herstellung einer elektrischen Verbindung zwischen Smartphone und akustischem Sensor erfolgt. Für die Aufnahme des Bildes kann die in das Smartphone integrierte Kamera verwendet werden.

In gleicher Weise kann die Halterung jedoch zusätzlich zum akustischen Sensor einen optischen Sensor, insbesondere eine Kamera aufweisen, um ein Bild von dem Pumpenaggregat aufzunehmen.

Die Halterung kann einen Handgriff aufweisen, mit dem sie derart in der Hand gehalten werden kann, dass die haltende Person auf die Anzeige des Smartphones sehen kann.

Weitere Merkmale, Vorteile und Eigenschaften der Erfindung werden nachfolgend anhand von Ausführungsbeispielen und den beigefügten Figuren näher erläutert, die diese Beispiele veranschaulichen. In den Figuren bezeichnen identisch Bezugsziffern oder -zeichen identische oder zumindest wirkungsgleiche Komponenten, Objekte oder Verfahrensschritte.

Obgleich ein vorstehend und nachfolgend beschriebenes Merkmale der Erfindung im Zusammenhang mit einer konkreten Ausführungsvariante offenbart sein mag, sei klargestellt, dass dieses Merkmal auch bei einer anderen Ausführungsvariante vorhanden sein kann, sofern seine Übertragung auf dieses andere Ausführungsbeispiel nicht ausgeschlossen ist.

Es sei darauf hingewiesen, dass im Rahmen der vorliegenden Beschreibung die Begriffe "aufweisen", "umfassen" oder "beinhalten" keinesfalls das Vorhandensein weiterer Merkmale ausschließen. Ferner schließt die Verwendung des unbestimmten Artikels bei einem Gegenstand nicht dessen Plural aus.

Es zeigen:

Fig. 1: ein Pumpenaggregat nach dem Stand der Technik
Fig. 2: perspektivische Darstellung eines erfindungsgemäßen Untersuchungsgeräts von vorn
Fig. 3: perspektivische Darstellung eines erfindungsgemäßen Untersuchungsgeräts von hinten
Fig. 4: idealisierte Versuchsanordnung mit zwei Schallquellen und zwei Messpositionen
Fig. 5: kombinierte Spektren der ersten und zweiten Audioaufnahme
Fig. 6 bis 12: Ablaufdiagramme des Verfahrens
Fig. 13: Vergleich des rekonstruierten Spektrums mit dem Originalspektrum des Pumpenaggregats.

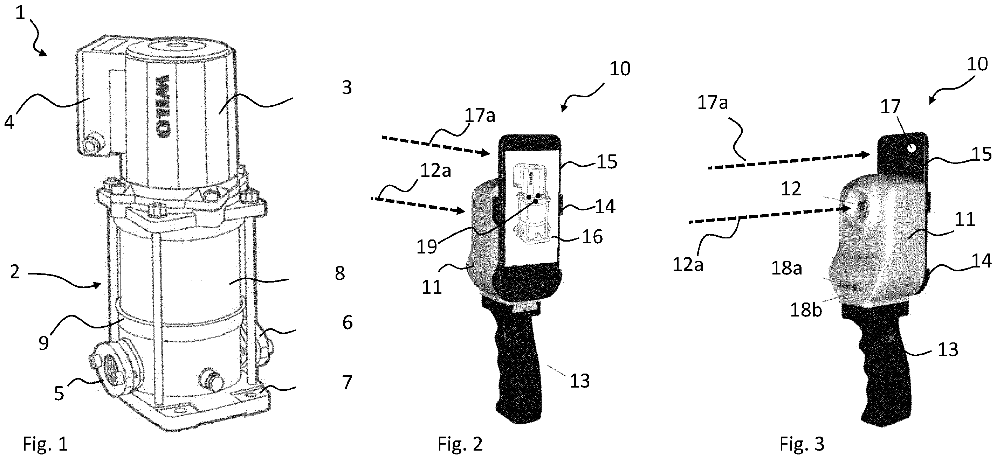

Figur 1 zeigt ein beispielhaftes Pumpenaggregat 1 nach dem Stand der Technik, umfassend eine Pumpeneinheit 2, einen diese antreibenden Elektromotor 3 und eine Pumpenelektronik 4 zur Steuerung und oder Regelung des Elektromotors. Die Pumpeneinheit 2 ist eine mehrstufige, normalsaugende, vertikale Hochdruck-Kreiselpumpe in sogenannter Inline-Bauweise, d.h. dass der Saugstutzen 5 und der Druckstutzen 6 des Pumpengehäuses 9 in einer Linie liegen. Der Elektromotor 3 ist ein Naßläufermotor ohne Gleitringdichtung. Elektromotor 3 und Pumpeneinheit 2 haben eine durchgehende Welle, auf der mehrere Laufräder drehfest montiert sind. Das Pumpenaggregat 1 steht mit dem Pumpengehäuse 9 auf einer Pumpenfußplatte 7 zur Fundamentbefestigung.

Innerhalb eines Mantelrohres 8 des Pumpengehäuses 9 sind axial übereinanderliegende Stufengehäuse angeordnet, in denen sich jeweils eines der Laufräder befindet, um die Förderflüssigkeit jeweils zum nächsten Stufengehäuse zu fördern, wobei das letzte, axial obenliegende Laufrad die Förderflüssigkeit in einen Ringraum zwischen den Stufengehäusen und dem Mantelrohr 8 fördert, wo es das Pumpengehäuse 9 durch den Druckstutzen 6 verlässt. Das Mantelrohr 8 gewährleistet die betriebssichere Abdichtung.

Die Pumpenelektronik 4 umfasst einen Frequenzumrichter, um die Drehzahl des Elektromotors 3 stufenlos zwischen einer Minimal- und einer Maximaldrehzahl einzustellen. Das Pumpenaggregat 1 wird eingesetzt zur Förderung von Kalt- und Warmwasser und anderen Flüssigkeiten ohne abrasive oder faserige Stoffe. Haupteinsatzgebiete sind Wasserversorgungs- und Druckerhöhungsanlagen, industrielle Umwälzsysteme, Verfahrenstechnik, Kühlwasserkreisläufe, Feuerlöschsysteme sowie Wasch- und Beregnungsanlagen.

Figuren 2 und 3 zeigen ein erfindungsgemäßes mobiles Untersuchungsgerät 10 von vorn und von hinten, wobei "vorn" diejenige Seite des Untersuchungsgeräts 10 bezeichnet, auf die ein Benutzer während einer Audioaufnahme blickt, und "hinten" diejenige Seite des Untersuchungsgeräts 10 ist, die bestimmungsgemäß dem Pumpenaggregat 1 während einer Audioaufnahme zugewandt ist. Das Untersuchungsgerät 10 ist mehrteilig. Es umfasst ein Gehäuse 11, in der eine Untersuchungselektronik angeordnet ist, einen mit dem Gehäuse 11 verbundenen Handgriff 13 zum Halten des Untersuchungsgeräts 10, eine Halterung 14 für ein Smartphone 15 und ein darin angeordnetes Smartphone 15. Über eine Schwalbenschwanzverbindung ist das Gehäuse 11 formschlüssig mit dem Handgriff 13 verbunden.

Die Untersuchungselektronik umfasst einen akustischen Sensor 12 in Gestalt eines Mikrofons, das vor einer Öffnung auf der dem Benutzer abgewandten Rückseite des Gehäuses 11 positioniert ist, um Luftschall von einem Objekt aufzunehmen, der das Untersuchungsgerät 10 entlang eines akustischen Pfades 12a erreicht. Das Mikrofon kann ein Richtmikrofon sein. Zur Vorverarbeitung, z.B. Verstärkung, Filterung und zur Digitalisierung weist die Untersuchungselektronik eine Signalverarbeitung mit wenigstens einem Prozessor, beispielsweise einem digitalen Signalprozessor (DSP), und wenigstens einem Speicher auf. Teil der Untersuchungselektronik ist außerdem eine Kommunikationsschnittstelle zum Smartphone 15, die aus einer zumindest teilweise in die Halterung 14 integrierten elektrisch-mechanischen Komponente, die beim Einsetzen des Smartphones 15 in die Halterung 14 von einer korrespondierenden Gegenschnittstelle kontaktiert wird, und einer Software besteht, um Daten protokollbasierte über die Kommunikationsschnittstelle zum Smartphone 15 zu senden und von diesem zu empfangen.

Darüber hinaus umfasst die Untersuchungselektronik eine erste Schnittstelle 18a in Gestalt einer USB-Schnittstelle, die als Spannungsversorgung dient, und eine zweite Schnittstelle 18b in Gestalt einer Cinch-Buchse als Datenschnittstelle zum Anschließen eines weiteren Sensors, beispielsweise eines Vibrationssensors. Die Trennung von Spannungsversorgung und Datenübertragung hat den Vorteil, dass das Risiko von Störsignalen verringert wird. Jedoch können in einer anderen Ausführungsvariante die Spannungsversorgung und die Datenübertagung auch über eine einzige gemeinsame Schnittstelle, z.B. eine USB-Schnittstelle erfolgen.

Das Smartphone 15 weist in bekannter Weise eine Anzeige 16 auf, die in Form eines berührungssensitiven Displays sogleich ein Bedienelement des Smartphones 15 bildet. In einen Speicher des Smartphones 15 ist eine Softwareapplikation, im allgemeinen Sprachgebrauch kurz "App" genannt, geladen, die eingerichtet ist, ein Verfahren zur Untersuchung des Zustands wenigstens einer Komponente 2, 3, 4 des Pumpenaggregats 1 insbesondere bezüglich eines Fehlerzustands, durch akustische Analyse des von dem Pumpenaggregat 1 abgegebenen Luftschalls auszuführen. Die Softwareapplikation bildet insofern eine Software zur Analyse akustischer Signale. Sie umfasst entsprechende programmtechnische Anweisungen, die, wenn sie von dem Untersuchungsgerät 10, genauer gesagt auf einem Prozessor des Smartphones 15 ausgeführt werden, bewirken, dass das Untersuchungsgerät 10 das Verfahren ausführt. Das Smartphone 15 steuert hierbei die Untersuchungselektronik, respektive den akustischen Sensor.

Das Smartphone 15 besitzt des Weiteren eine Kamera 17, die sich in dem in der Halterung 14 gehaltenen Zustand des Smartphones 15 hinten, d.h. auf der dem Benutzer abgewandten Rückseite des Smartphones 15 befindet, so dass sie Bilder entlang eines optischen Pfades 17a aufnehmen kann, der im Wesentlichen parallel zum akustischen Pfad 12a ist.

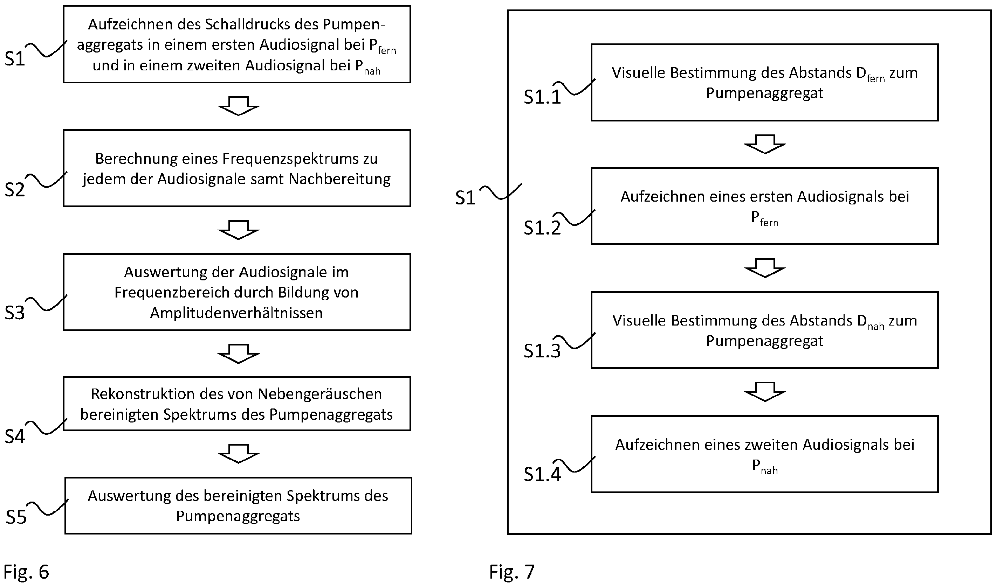

Das Verfahren zur Untersuchung des Pumpenaggregatzustands durch akustische Analyse des von dem Pumpenaggregat 1 abgegebenen Luftschalls wird nachfolgend erläutert. Figuren 6 bis 12 zeigen Ablaufdiagramme mit den einzelnen Verfahrensschritten.

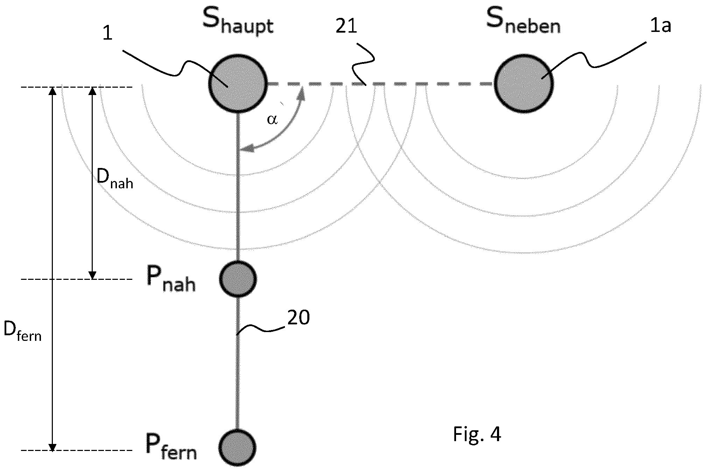

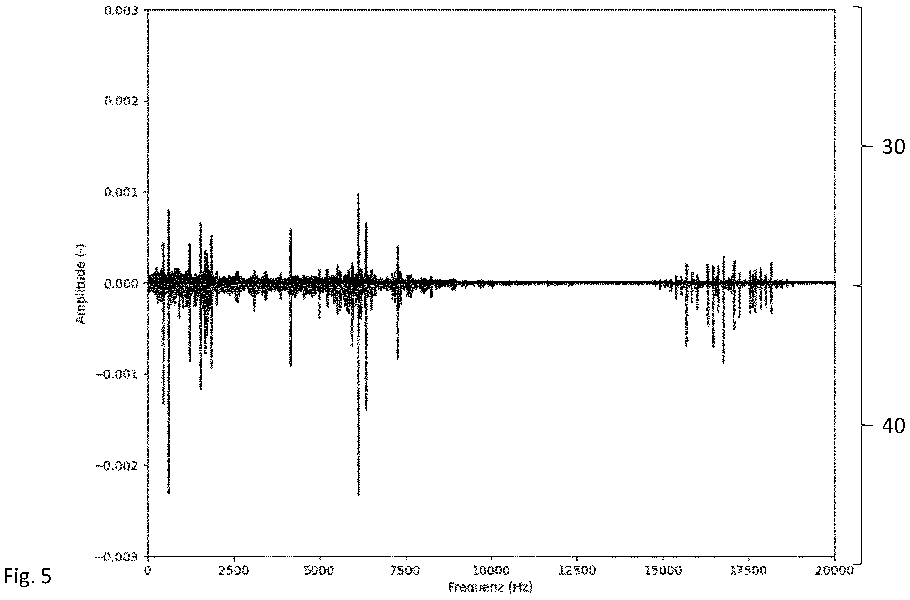

Die Grundidee der erfindungsgemäßen Untersuchungsmethode besteht darin, durch wiederholte akustische Messungen unter Variation der Messposition im Raum mehrere gleichzeitig vorhandene Schallquellen $S_{haupt}$, $S_{neben}$ (siehe Figur 4) aufgrund deren Spektren zu differenzieren, wobei im vorliegenden Beispiel das Frequenzspektrum verwendet wird und die Spektralanteile somit Frequenzen sind. Durch die Variation der Messposition und eine anschließende algorithmische Datenanalyse, werden die gemessenen akustischen Signale in kombinierte Spektren 30, 40 (siehe Figur 5) umgewandelt, die Hauptschallquelle $S_{haupt}$ von der oder den Nebenschallquellen $S_{neben}$ spektral getrennt und das separierte bzw. rekonstruierte Spektrum der Hauptschallquelle $S_{haupt}$ zur beliebigen weiteren Verarbeitung ausgegeben.

Ein kombiniertes Spektrum ist im vorliegenden Beispiel ein solches Frequenzspektrum, das sowohl Frequenzanteile der Hauptschallquelle $S_{haupt}$ als auch der Nebenschallquelle $S_{neben}$ beinhaltet.

Figur 4 zeigt eine idealisierte Untersuchungsanordnung, die die Grundidee der Erfindung veranschaulicht, um Nebengeräusche einer Nebenschallquelle $S_{neben}$ bei der Untersuchung des Pumpenaggregats 1, das hier die Haupt-

schallquelle $S_{haupt}$ bildet, auszublenden. Die Nebenschallquelle $S_{neben}$ kann beispielsweis ein weiteres Pumpenaggregat 1a sein, das baulich neben dem zu untersuchenden Pumpenaggregat 1 aufgestellt ist und betrieben wird.

Obwohl in dem vorliegenden Beispiel zum besseren Verständnis nur zwei Schallquellen $S_{haupt}$, $S_{neben}$ und für die Durchführung des Verfahrens nur zwei Messpositionen $P_{fern}$, $P_{nah}$ verwendet werden, kann das Verfahren auch bei mehreren Nebenschallquellen angewendet werden, und gegebenenfalls mehr als zwei Messungen an verschiedenen Orten umfassen. Im einfachsten Fall jedoch besteht die Versuchsanordnung, wie Figur 4 zeigt, aus zwei Schallquellen, nämlich der Hauptschallquelle $S_{haupt}$ und der Nebenschallquelle $S_{neben}$ sowie aus zwei Messpositionen, nämlich einer ersten Messposition $P_{fern}$ mit größerer Distanz $D_{fern}$ zur Hauptschallquelle $S_{haupt}$ und einer zweiten Messposition $P_{nah}$ mit geringerer Distanz $D_{nah}$ zur Hauptschallquelle $S_{haupt}$.

Optimal wäre es, wenn die beiden Messpositionen $P_{fern}$, $P_{nah}$ auf einer Messkurve liegen, die einer Kreisbahn um die Nebenschallquelle $S_{neben}$ entspricht. Dies ist in der Praxis jedoch nicht immer durchführbar.

Die Hauptschallquelle $S_{haupt}$ und die beiden Messpositionen $D_{fern}$, $D_{nah}$ liegen deshalb auf einer Messlinie 20 sowie in einer horizontalen Messebene. Diese Linie 20 verläuft hier außerdem orthogonal zu einer Verbindungslinie 21 zwischen den beiden Schallquellen $S_{haupt}$, $S_{neben}$, obgleich sie in der Praxis in einem anderen Winkel $\alpha$ zur Verbindungslinie 21 liegen kann. Die Orthogonalität zwischen der Messlinie 20 und der Verbindungslinie 21 sowie die Verwendung von zwei Messpositionen $P_{fern}$, $P_{nah}$ mit möglichst geringer Distanz zur Hauptschallquelle $S_{haupt}$ (im Vergleich zur Distanz zwischen Hauptschallquelle $S_{haupt}$ und Nebenschallquelle $S_{neben}$), vorzugsweise kleiner als die Distanz zwischen Hauptschallquelle $S_{haupt}$ und Nebenschallquelle $S_{neben}$, stellen hierbei sicher, dass man sich möglichst tangential zum Schallfeld der Nebenschallquelle $S_{neben}$ bewegt. Die Nebenschallquelle $S_{neben}$ kann außerhalb der horizontalen Messebene liegen.

Das Untersuchungsverfahren umfasst das Aufzeichnen eines ersten Audiosignals in einer ersten Audioaufnahme im Betrieb des Pumpenaggregats 1 an einem ersten geometrischen Ort $P_{fern}$ mit einem ersten Abstand $D_{fern}$ zum Pumpenaggregat 1, und das Aufzeichnen eines zweiten Audiosignals in einer zweiten Audioaufnahme im Betrieb des Pumpenaggregats 1 an einem zweiten geometrischen Ort $P_{nah}$ mit einem zweiten Abstand $D_{nah}$ zum Pumpenaggregat 1, der geringer ist, als der erste Abstand $D_{fern}$. Die erste Audioaufnahme beinhaltet somit Audiodaten einer Fernmessung, die zweite Audioaufnahme Audiodaten einer Nahmessung. Die beiden Orte $P_{fern}$, $P_{nah}$ liegen mit dem akustisch zu vermessenden Pumpenaggregat 1 auf einer Messlinie 20. Die Aufzeichnungen erfolgen jeweils mit dem akustischen Sensor 12, gesteuert von der Softwareapplikation auf dem Smartphone 15.

Der Sensor 12 erfasst den Schalldruck p des von dem Pumpenaggregat 1 ausgehenden Luftschalls, der in dem betrachteten Beispiel allerdings von dem Luftschall einer benachbarten Schallquelle überlagert ist und somit miterfasst wird. Der Sensor 12 liefert ein analoges elektrisches Signal, das den Schalldruck-Zeit-Verlauf repräsentiert. Dieses Sensorsignal wird von der Untersuchungselektronik digitalisiert, ggf. zuvor oder anschließend verstärkt und/ oder gefiltert, zwischengespeichert und als Audioaufnahme der Softwareapplikation anschließend zur Verfügung gestellt, welche die Audioaufnahme entsprechend einliest, um sie zu verarbeiten. Dies erfolgt sowohl für die erste als auch für die zweite Audioaufnahme. Eine Audioaufnahme beinhaltet somit den digitalisierten Schalldruck-Zeit-Verlauf.

Die Bestimmung des Zustands des Pumpenaggregats 1 erfolgt durch Analyse eines von den Nebengeräuschen der Nebenschallquelle 1a bereinigten Frequenzspektrums 50 des Pumpenaggregats 1, das durch einen Vergleich von Amplitudenwerten von aus der ersten und zweiten Audioaufnahme ermittelten Frequenzen rekonstruiert wird. Dies wird nachfolgend erläutert.

Figur 6 zeigt den groben Verfahrensablauf, beginnend mit der bereits beschriebenen Aufzeichnung des ersten und zweiten Audiosignals vom Pumpenaggregat 1 einschließlich der Nebengeräusche der Nebenschallquelle(n) 1a $S_{neben}$ bei den Messpositionen $P_{fern}$, $P_{nah}$ in Schritt S1. Dies stellt den Ausgangspunkt der nachfolgenden Betrachtung dar. Hieran schließen sich die folgenden drei Schritte an, die den Kern des Verfahrens für eine spektralbasierte Differenzierung mehrerer Schallquellen $S_{haupt}$, $S_{neben}$ bilden:

- in Schritt S2: Berechnung und Analyse der kombinierten Spektren für alle Messpositionen.
  Es erfolgt hier die Berechnung des Frequenzspektrums 30, 40 von jedem der Audiosignale sowie eine Nachbereitung.
- in Schritt S3: Berechnung der spektralen Amplitudenverhältnisse.
  Es erfolgt hier die Auswertung der Audiosignale im Frequenzbereich durch Bildung von Amplitudenverhältnissen für korrespondierende Frequenzen in den Spektren 30, 40 des ersten und zweiten Audiosignals,
- in Schritt S4: Rekonstruktion des Spektrums der Hauptschallquelle $S_{haupt}$. Es erfolgt hier die Rekonstruktion des von Nebengeräuschen bereinigten Spektrums 50 des Pumpenaggregats 1.

An diese drei Kernschritte S2, S3, S4 schließt sich dann die Auswertung des bereinigten Spektrums 50 des Pumpenaggregats 1 in Schritt S5 an, die die eigentliche Bestimmung des Zustands des Pumpenaggregats 1 beinhaltet, beispielsweise die Bestimmung der Drehzahl und/ oder die allgemeine Erkennung eines Fehlerzustands und gegebenenfalls die Identifizierung des konkreten Fehlers.

Es sei angemerkt, dass diese Auswertung als solche nicht Teil der Erfindung ist. Diesbezüglich wird auf die einschlägige Fachliteratur verwiesen.

Figur 7 veranschaulicht die Einzelschritte von Schritt S1. Der Nutzer bewegt das Untersuchungsgerät 10 zunächst zur ersten Messposition $P_{fern}$.

Es erfolgt hier zunächst eine visuelle Bestimmung des Abstands $D_{fern}$ zum Pumpenaggregat 1 in Schritt S1.1. Hierzu wird die Kamera 17 im Smartphone 15 verwendet und von der Softwareapplikation angesteuert. Die Kamera 17 erfasst das Pumpenaggregat 1 und nimmt wenigstens ein Bild, gegebenenfalls ein Video auf, das in Echtzeit ausgewertet wird. Dies erfolgt, indem markante Referenzpunkte 19 auf der Oberfläche des Pumpenaggregats 1 in dem Bild identifiziert werden, aus diesen eine Referenzebene gebildet und der Abstand $D_{fern}$ zwischen der Kamera und der Referenzebene entlang einer dazu orthogonalen Messlinie ermittelt wird. Der ermittelte Abstand $D_{fern}$ wird dem ersten Audiosignal zugeordnet abgespeichert.

Bei der Abstandsbestimmung (Messung) muss der Nutzer das Untersuchungsgerät 10 möglichst ruhig halten, sodass der Abstand während der Messung konstant bleibt. Es kann vorgesehen sein, dass eine Information über die Güte der Positionseinhaltung auf der Anzeige 16 dargestellt wird, beispielsweise eine grafische Information. So kann z.B. ein grüner Kreis um das Pumpenaggregat 1 anzeigen, dass der Abstand gehalten wird. Demgegenüber kann ein roter Kreis um das Pumpenaggregat auf der Anzeige 16 anzeigen, dass während der Abstandsbestimmung eine zu große Veränderung der Position vorliegt. Die Messung muss dann wiederholt werden. Somit kann die Einhaltung der Messposition optisch auf der Anzeige 16, insbesondere dem Smartphone-Display, während der Messung kontrolliert werden.

Im Anschluss an die visuelle Bestimmung des Abstands $D_{fern}$ erfolgt das Aufzeichnen des ersten Audiosignals in einer ersten Audioaufnahme bei der ersten Messposition $P_{fern}$ in Schritt S1.2. Wie oben bereits erläutert, umfasst dies die Erfassung des Luftschalls des Pumpenaggregats 1 einschließlich der Störgeräusche der Nebenschallquelle(n) 1a mit Hilfe des akustischen Sensors 12, gegebenenfalls auch eine Vorverarbeitung wie eine Verstärkung und/ oder Filterung, sowie eine Digitalisierung und Speicherung des Sensorsignals als Schalldruck-Zeit-Verlauf, um diesen der Softwareapplikation auf dem Smartphone 15 als erste Audioaufnahme bereitzustellen.

Obgleich die visuelle Abstandsbestimmung in Schritt S1.1 in Fig. 7 zeitlich der Aufzeichnung in Schritt S1.2 vorausgeht, kann die visuelle Abstandsbestimmung selbstverständlich auch während oder nach der Aufzeichnung in Schritt S1.2 erfolgen. Dabei ist es sogar bevorzugt, dass die Abstandsbestimmung während der gesamten Dauer der Aufzeichnung erfolgt, insbesondere wiederholt, damit der aktuell bestimmte Abstand auf der Anzeige 16 angezeigt werden kann. Denn die Abstandsbestimmung benötigt weniger Zeit als die Aufzeichnung.

Der Nutzer bewegt nun das Untersuchungsgerät 10 nun zur zweiten Messposition $P_{nah}$. Es folgt eine visuelle Bestimmung des Abstands $D_{nah}$ zum Pumpenaggregat 1 in Schritt S1.3. Dies erfolgt analog zu Schritt S1.1. Auch hierzu wird die Kamera 17 im Smartphone 15 verwendet und von der Softwareapplikation angesteuert und analog zu Schritt S1.1 der Abstand $D_{nah}$ zwischen der Kamera 17 und der Referenzebene 19 ermittelt. Der ermittelte Abstand $D_{nah}$ wird der zweiten Audioaufnahme zugeordnet abgespeichert.

Anschließend erfolgt das Aufzeichnen des zweiten Audiosignals in einer zweiten Audioaufnahme bei der zweiten Messposition $P_{fern}$ in Schritt S1.4 an. Dies erfolgt analog zu Schritt S1.2. Auch dies umfasst die Erfassung des Luftschalls des Pumpenaggregats 1 samt Störgeräusche der Nebenschallquelle(n) mit Hilfe des akustischen Sensors 12, gegebenenfalls eine Vorverarbeitung wie eine Verstärkung und/ oder Filterung, sowie eine Digitalisierung und Speicherung des Sensorsignals als Schalldruck-Zeit-Verlauf, um diesen der Softwareapplikation auf dem Smartphone 15 als zweite Audioaufnahme bereitzustellen.

Auch hier sei angemerkt, dass obgleich die visuelle Abstandsbestimmung in Schritt S1.3 in Fig. 7 zeitlich der Aufzeichnung in Schritt S1.3 vorausgeht, die visuelle Abstandsbestimmung selbstverständlich auch während oder nach der Aufzeichnung aus Schritt S1.4 erfolgen kann. Auch hier ist es bevorzugt, dass die Abstandsbestimmung während der gesamten Dauer der Aufzeichnung erfolgt, insbesondere wiederholt, damit der aktuell bestimmte Abstand auf der Anzeige 16 angezeigt werden kann.

Schließlich sei darauf hingewiesen, dass die Aufzeichnung des zweiten Audiosignals (Nah-Aufnahme) an der dem Pumpenaggregat 1 näher gelegenen Messposition ($P_{nah}$) in dem hier dargestellten Beispiel zwar nach der Aufzeichnung des ersten Audiosignals (Fern-Aufnahme) an der dem Pumpenaggregat 1 entfernter gelegenen Messposition ($P_{fern}$) erfolgt, diese Reihenfolge selbstverständlich auch umgekehrt sein kann. Die visuelle Abstandsmessung ist dabei von großem Vorteil, weil die Softwareapplikation dadurch den Abstand unmittelbar kennt, in dem das erste und zweite Audiosignal jeweils aufgenommen worden ist, so dass diese Aufnahmen nicht zwingend in einem vorgegebenen Abstand erfolgen müssen, der von der Softwareapplikation erwartet wird. Somit können die Schritte S1.1. bis S1.4 in beliebiger Reihenfolge ausgeführt werden, beispielsweise:

$$S1.1. \rightarrow S1.2 \rightarrow S1.3 \rightarrow S1.4$$

$$S1.2. \rightarrow S1.1 \rightarrow S1.3 \rightarrow S1.4$$

S1.1. $\rightarrow$ S1.2 $\rightarrow$ S1.4 $\rightarrow$ S1.3

S1.2. $\rightarrow$ S1.1 $\rightarrow$ S1.4 $\rightarrow$ S1.3

S1.3. $\rightarrow$ S1.4 $\rightarrow$ S1.1 $\rightarrow$ S1.2

S1.4. $\rightarrow$ S1.3 $\rightarrow$ S1.1 $\rightarrow$ S1.2

S1.3. $\rightarrow$ S1.4 $\rightarrow$ S1.2 $\rightarrow$ S1.1

S1.4. $\rightarrow$ S1.3 $\rightarrow$ S1.2 $\rightarrow$ S1.1

Ferner können die Schritte S1.1. und S1.2 und/ oder S1.3. und S1.4 wie bereits erwähnt in einer Ausführungsvariante gleichzeitig ausgeführt werden. Zu berücksichtigen ist dabei lediglich, dass eine Audioaufnahme und eine Abstandsmessung stets ein einander zugeordnetes Paar an Daten bilden und somit zeitlich zusammengehörig erfolgen müssen.

Die genannte Speicherung des ersten und zweiten Audiosignals in jeweils einer Audioaufnahme kann in einem üblichen Audio-Datenformat erfolgen, z.B. in Form einer WAV Datei (Wellenform-Format), vorzugsweise in einem Format, in dem der entsprechende Schalldruck-Zeit-Verlauf als unkomprimierte Rohdaten enthalten ist.

Die Aufzeichnung des ersten und zweiten Audiosignals, d.h. der digitalen Schalldruck-Zeit-Verläufe, wird von der Softwareapplikation veranlasst. Insoweit ist die Untersuchungselektronik zur Softwareapplikation als angeschlossenes Peripheriegerät zu betrachten, das ihr die zur Analyse benötigen Daten bereitstellt. Als in Figuren 6 und 7 nicht dargestellter Zwischenschritt erfolgt somit nach der Aufzeichnung des ersten und zweiten Audiosignals deren Übertragung von der Untersuchungselektronik in das Smartphone 15, in dem die Softwareapplikation die Audioaufnahmen aufbereitet und/ oder auswertet. Aus Sicht der Softwareapplikation ist dies ein Einlesen des Schalldruck-Zeit-Verlaufs bzw. Sensorsignals.

Es sei angemerkt, dass die Aufbereitung und/ oder Auswertung der Audiosignale alternativ zum Smartphone 15 auf einem Server stattfinden kann, zu dem das Smartphone 15 die aufgezeichneten Audiosignale, vorzugsweise samt der ermittelten Abstände $D_{nah}$, $D_{fern}$ überträgt. Somit kann zumindest ein Teil der Softwareapplikation auf einem Server (Cloud) ablaufen.

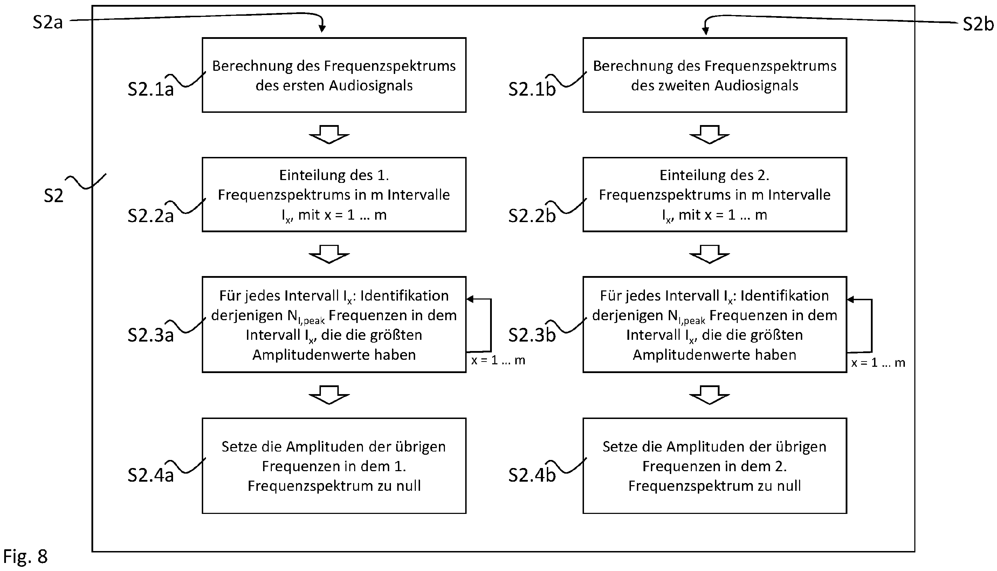

Nach dieser Übertragung bzw. dem Einlesen erfolgt in Schritt S2 die Berechnung der Schalldruck-Frequenz-Spektren der Audiosignale mittels einer FFT-Analyse (Fast-Fourier-Transformation) und deren Nachbereitung. Die Einzelschritte zeigt Figur 8 in Gestalt zweier paralleler Pfade S2a, S2b, die inhaltlich dieselben Schritte umfassen, allerdings angewendet einerseits auf das erste Audiosignal und andererseits auf das zweite Audiosignal. Die parallelen Pfade S2a, S2b können zeitlich nacheinander oder abwechselnd Schritt für Schritt ausgeführt werden.

Im ersten Pfad S2a erfolgt zunächst in Schritt S2.1a die Berechnung des Schalldruck-Frequenzspektrums 30 des ersten Audiosignals und anschließend im zweiten Pfad S2b oder im Anschluss an den ersten Pfad S2a in Schritt S2.1b die Berechnung des Schalldruck-Frequenzspektrums 40 des zweiten Audiosignals. Die beiden Frequenzspektren 30, 40 sind in Figur 5 dargestellt, genauer gesagt in einem einheitlichen Diagramm einander gegenübergestellt, wobei die Amplitudenwerte des Spektrums 40 des zweiten Audiosignals mit einem negativen Vorzeichen versehen sind. Es ist erkennbar, dass die Amplitudenwerte der Frequenzen im Spektrum 30 des ersten Audiosignals betraglich niedriger sind, als die Amplitudenwerte der Frequenzen im Spektrum 40 des zweiten Audiosignals, weil das zweite Audiosignal (in Figur 5 unten) näher am Pumpenaggregat 1 aufgenommen wurde als das erste Audiosignal und der Luftschall am zweiten Messort entsprechend stärker ist, als am ersten Messort, bzw. die Geräusche nahe des Pumpenaggregats lauter sind, als weiter von ihm weg.

Die nun folgende Nachbereitung umfasst eine Eliminierung von Rauschen im Signal und gleichzeitig eine Ausdünnung des Frequenzspektrums, so dass die sich anschließende Signalverarbeitung vereinfacht wird und weniger Rechenleistung erfordert. Diese Nachbereitung umfasst ein Selektieren dominierender Frequenzen innerhalb der Schalldruck-Frequenz-Spektren. Dominierende Frequenzen sind jene Frequenzen mit einem vergleichsweise hohen Amplitudenwert. Mit anderen Worten werden die relevantesten "Peaks" im Spektrum identifiziert und für die weitere Analyse verwendet. In der hier dargestellten Ausführungsvariante erfolgt die Selektion intervallbezogen, d.h. jeweils für ein Intervall einer Anzahl an Frequenzintervallen (Frequenzbändern), in die das Frequenzspektrum eingeteilt wird. Die Nachbereitung/ Frequenzselektion erfolgt in den Schritten S2.2a-S2.4a bzw. S2.2b-S2.4b.

In einem ersten Schritt S2.2a im ersten Pfad S2a erfolgt die Einteilung des ersten Frequenzspektrums 30, d.h. des Spektrums 30 der ersten Audioaufnahme, in m Intervalle. Hierzu wird das Frequenzspektrum 30 entlang der Frequenzachse als Gesamtintervall $I_{total}$ betrachtet, das von einer Minimalfrequenz $f_{min}$ zu einer Maximalfrequenz $f_{max}$ reicht, $I_{total} = [f_{min}, f_{max}]$. Alternativ kann das Gesamtintervall $I_{total}$ aus dem Gesamtfrequenzspektrum 30 herausgeschnitten sein, so dass die Minimalfrequenz $f_{min}$ und die Maximalfrequenz $f_{max}$ abweichend vom tatsächlichen Frequen-

zumfang im Frequenzspektrum 30 festgelegt sind. Beispielsweise kann die Minimalfrequenz $f_{min}$ = 20Hz und die Maximalfrequenz $f_{max}$ = 20kHz betragen. Sinnvollerweise haben alle Intervalle dieselbe spektrale Breite, um die Signalverarbeitung zu vereinfachen. Sie können jedoch auch unterschiedliche spektrale Breiten haben.

In gleicher Weise wird in dem ersten Schritt S2.2b im zweiten Pfad S2b verfahren, in dem die Einteilung des zweiten Frequenzspektrums 40, d.h. des Spektrums 40 der zweiten Audioaufnahme in m Intervalle erfolgt.

Nach dem ersten Schritt S2.2a erfolgt in einem zweiten Schritt S2.3a die Frequenzselektion, was genauer betrachtet zunächst eine Identifikation ist. Hierzu werden für jedes Intervall $I_x$ (mit x von 1 bis m) eine Anzahl $N_{I,peak}$ derjenigen Frequenzen $f_k$ in dem Intervall $I_x$ identifiziert, die die größten Amplitudenwerte haben. Die Anzahl $N_{I,peak}$ kann für alle Intervalle $I_x$ gleich oder aber verschieden festgelegt sein. Letzteres bietet die Möglichkeit, die Intervalle unterschiedlich zu behandeln. So können beispielsweise dort, wo Rauschen stärker auftritt, weniger Frequenzen $f_k$ selektiert werden, und dort, wo eher ein Nutzsignal zu erwarten ist, mehr Frequenzen $f_k$ selektiert werden. Beispielsweise können pro Intervall zwischen 50 und 500, vorzugsweise 100 dominierende Frequenzen $f_k$ gewählt werden. Dies kann derart erfolgen, dass alle Frequenzen $f_k$ eines Intervalls $I_x$, jeweils durch einen Indexwert k identifiziert, sortiert werden nach dem Betrag ihrer Amplitude (aufsteigend oder absteigend) und dass bei absteigender Sortierreihenfolge die ersten $N_{I,peak}$ Frequenzen, bei aufsteigender Sortierreihenfolge die letzten $N_{I,peak}$ Frequenzen $f_k$ selektiert werden. Dieses Vorgehen wird für jedes Intervall $I_x$ durchgeführt, d.h. iterativ von x = 1 bis m wiederholt.

In gleicher Weise wird in dem zweiten Schritt S2.3b im zweiten Pfad S2b verfahren, in dem für jedes Intervall $I_x$ (mit x von 1 bis m) eine Anzahl $N_{I,peak}$ derjenigen Frequenzen $f_k$ in dem Intervall $I_x$ identifiziert wird, die die größten Amplitudenwerte haben.

Nach der Identifikation der dominierenden Frequenzen $f_k$ erfolgt deren Selektion im dritten Schritt S2.4a im ersten Pfad S2a dadurch, dass die Amplituden aller anderen, d.h. nicht-dominierender Frequenzen $f_k$ zu null gesetzt werden, so dass quasi nur noch die dominierenden Frequenzen $f_k$ das Spektrum des ersten Audiosignals bilden, welches aufgrund dieser Änderung als abgeleitetes (modifiziertes) Frequenzspektrum des ersten Audiosignals zu betrachten ist. Hierdurch sind die dominierenden Frequenzen $f_k$ automatisch selektiert. Alternativ hierzu können die identifizierten dominierenden Frequenzen in einen neuen Datenvektor, der quasi ein leeres Spektrum beschreibt, geschrieben werden.

In gleicher Weise wird in dem dritten Schritt S2.4b im zweiten Pfad S2b verfahren, in dem die Amplituden aller anderen, d.h. nicht identifizierten Frequenzen $f_k$ zu null gesetzt werden, so dass quasi nur noch die dominierenden Frequenzen $f_k$ das Spektrum des zweiten Audiosignals bilden, welches aufgrund dieser Änderung als abgeleitetes (modifiziertes) Frequenzspektrum des zweiten Audiosignals zu betrachten ist.

Durch die beschriebene Nachbereitung in Gestalt einer Frequenzselektion wird Rauschen in den Schalldruck-Frequenz-Spektren eliminiert und ferner die Datenmenge erheblich reduziert, so dass die weitere Verarbeitung der abgeleiteten (modifizierten) Frequenzspektren weniger Rechenleistung benötigt. Wird beispielsweise der Frequenzbereich von 1 Hz bis 20.000 Hz in 10 gleiche Intervalle à 2000 Frequenzen eingeteilt, bedeutet eine Selektion der 100 dominierenden Frequenzen eine Ausdünnung des Frequenzspektrums um 95%, da die Amplituden von 1900 Frequenzen zu null gesetzt werden.

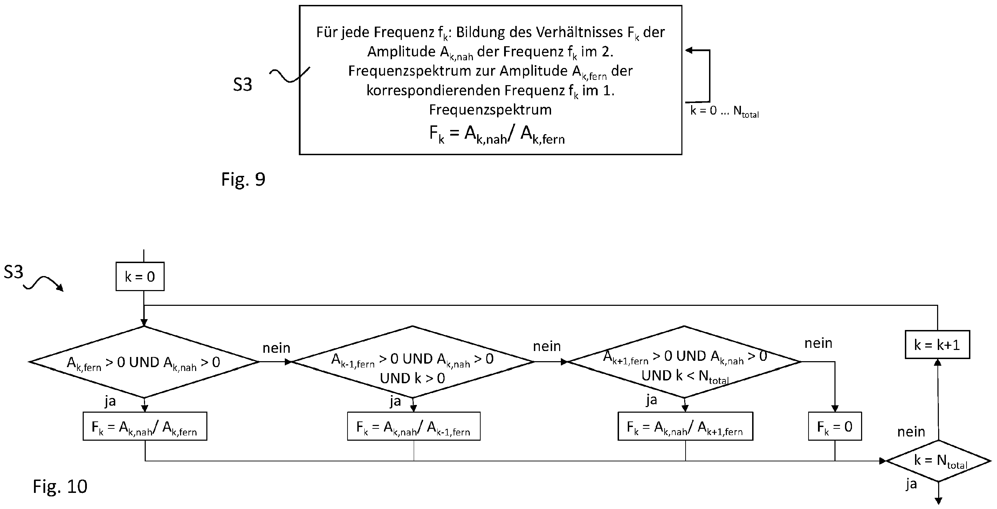

Eine Implementierung von Schritt S3 ist in Figur 9 dargestellt. Dabei ist vorgesehen, dass für jede Frequenz $f_k$ das Verhältnis $F_k$ der Amplitude $A_{k,nah}$ der Frequenz $f_k$ im abgeleiteten Frequenzspektrum des zweiten Audiosignals (Nah-Spektrum) zur Amplitude $A_{k,fern}$ der korrespondierenden Frequenz $f_k$ im abgeleiteten Frequenzspektrum des ersten Audiosignals (Fern-Spektrum) gebildet wird. Die Verhältnisse $F_k$ können als Peak-Faktoren bezeichnet werden und berechnen sich gemäß

$$F_k = A_{k,nah}/ A_{k,fern}$$

Die Berechnung erfolgt iterativ für alle $N_{total}$ Frequenzen $f_k$ nacheinander, wobei k der Laufindex der diskreten Frequenzachse der Spektren ist und Werte von k = 0 bis $N_{total}$ annimmt.

Zur Vermeidung einer Division durch null kann vor der Berechnung eines jeden Verhältnisses $F_k$ die Abfrage einer Bedingung erfolgen, ob die Amplitude $A_{k,fern}$ der Frequenz $f_k$ im abgeleiteten Frequenzspektrum des ersten Audiosignals (FernSpektrum) größer null ist. Das Amplitudenverhältnis $F_k$ wird zu null gesetzt, wenn dies nicht der Fall ist, anderenfalls wie oben berechnet. Alternativ kann in der Bedingung die Abfrage erfolgen, ob die Amplitude $A_{k,fern}$ der Frequenz $f_k$ im abgeleiteten Frequenzspektrum des ersten Audiosignals (Fern-Spektrum) und die Amplitude $A_{k,nah}$ der Frequenz $f_k$ im abgeleiteten Frequenzspektrum des zweiten Audiosignals (Nah-Spektrum) größer null sind. Das Amplitudenverhältnis $F_k$ wird dann aus $F_k = A_{k,nah}/ A_{k,fern}$ berechnet, wenn dies der Fall ist, anderenfalls zu null gesetzt.

Bei der Berechnung der Amplitudenverhältnisse $F_k$ kann ein möglicher Offsetfehler berücksichtigt werden, der sich darin kennzeichnet, dass einander korrespondierende Frequenzen in den Spektren 30, 40 des ersten und zweiten Audiosignals nicht denselben Indexwert k haben. Folglich liegen einander korrespondierende Frequenzen auch in den abgeleiteten Frequenzspektren nicht an derselben Stelle k. Figur 10 zeigt den Verfahrensablauf für eine in Schritt S3 implementierte Offset-Korrektur, die alternativ zu Schritt S3 in Fig. 9 ausgeführt werden kann.

Die Offset-Korrektur baut auf der zuletzt genannten Bedingung auf und erweitert diese. So wird für die Frequenz

$f_k$ das Verhältnis $F_k$ des Amplitudenwerts $A_{k,nah}$ der Frequenz $f_k$ im abgeleiteten Frequenzspektrum des zweiten Audiosignals zum Amplitudenwert $A_{k,fern}$ derselben Frequenz $f_k$ bzw. der Frequenz mit demselben Index k im abgeleiteten Frequenzspektrum des ersten Audiosignals nur dann berechnet, wenn beide genannten Amplitudenwerte $A_{k,nah}$, $A_{k,fern}$ größer null sind (erste Bedingung). Es gilt dann wie oben $F_k = A_{k,nah}/A_{k,fern}$, wobei dieser Fall eine exakte spektrale Übereinstimmung betrifft.

Ist diese erste Bedingung nicht erfüllt, d.h. der Amplitudenwerte $A_{k,fern}$ des Fern-Spektrums ist null, werden nacheinander die beiden unmittelbaren Nachbarfrequenzen $f_{k-1}$ und $f_{k+1}$ der Frequenz $f_k$ im abgeleiteten Frequenzspektrum der ersten Audioaufnahme, d.h. im Fern-Spektrum geprüft.

So wird für die Frequenz $f_k$ das Verhältnis $F_k$ des Amplitudenwerts $A_{k,nah}$ der Frequenz $f_k$ im abgeleiteten Frequenzspektrum der zweiten Audioaufnahme zum Amplitudenwert $A_{k-1,fern}$ der zu $f_k$ vorherigen Frequenz $f_{k-1}$ im abgeleiteten Frequenzspektrum der ersten Audioaufnahme berechnet, wenn diese beiden genannten Amplitudenwerte $A_{k,nah}$, $A_{k-1,fern}$ größer null sind (zweite Bedingung). Es liegt dann ein spektraler Offset $\Delta f$ des Fern-Spektrums nach oben vor und es gilt dann $F_k = A_{k,nah}/A_{k-1,fern}$. Diese Berechnung erfolgt allerdings nur für k > 0, damit $A_{k-1,fern}$ berechnet werden kann.

Ist diese zweite Bedingung nicht erfüllt, wird geprüft, ob der Amplitudenwert $A_{k,nah}$ der Frequenz $f_k$ im abgeleiteten Frequenzspektrum der zweiten Audioaufnahme und der Amplitudenwert $A_{k+1,fern}$ der zu $f_k$ nächsten Frequenz $f_{k+1}$ im abgeleiteten Frequenzspektrum der ersten Audioaufnahme beide größer null sind (dritte Bedingung). In diesem Fall wird für die Frequenz $f_k$ das Verhältnis aus $F_k = A_{k,nah}/A_{k+1,fern}$ berechnet. Diese Berechnung erfolgt allerdings nur für k < $N_{total}$, damit $A_{k+1,fern}$ berechnet werden kann.

Ist auch diese dritte Bedingung nicht erfüllt, wird für die Frequenz $f_k$ das Verhältnis $F_k$ auf den Wert null gesetzt, denn in diesem Fall ist entweder der Amplitudenwert $A_{k,nah}$ der Frequenz $f_k$ im abgeleiteten Frequenzspektrum des zweiten Audiosignals gleich null oder es sind die Amplituden aller drei Frequenzen $f_k$, $f_{k-1}$, $f_{k+1}$ im abgeleiteten Frequenzspektrum des zweiten Audiosignals gleich null.

Insgesamt stellt sich die Offset-Korrektur unter Ausklammerung der Randfrequenzen $f_k$ für k = 0 und k = $N_{total}$ mathematisch wie folgt dar, wobei für die Amplitudenwerte $A_k$ bei den diskreten Frequenzen $f_k$ zunächst Folgendes gilt:

$$A_k^{fern} = A_k^{fern}(f_k) \text{ mit } f_k = f_{min} + k \cdot \Delta f \text{ und } k = 0, ..., N_{total}$$

$$A_k^{nah} = A_k^{nah}(f_k) \text{ mit } f_k = f_{min} + k \cdot \Delta f \text{ und } k = 0, ..., N_{total}$$

wobei $\Delta f$ die Auflösung der Frequenzachse ist.

a) Exakte spektrale Übereinstimmung:

$$(A_k^{fern} > 0) \wedge (A_k^{nah} > 0) \Rightarrow F_k = A_k^{nah}/A_k^{fern}$$

b) Geringfügiger spektraler Offset $\Delta f$ des Fern-Spektrums nach oben

$$(A_{k-1}^{fern} > 0) \wedge (A_k^{nah} > 0) \wedge (k > 0) \Rightarrow F_k = A_k^{nah}/A_{k-1}^{fern}$$

c) Geringfügiger spektraler Offset $\Delta f$ des Fern-Spektrums nach unten

$$(A_{k+1}^{fern} > 0) \wedge (A_k^{nah} > 0) \wedge (k < N_{I,total}) \Rightarrow F_k = A_k^{nah}/A_{k+1}^{fern}$$

Tritt keiner dieser drei genannten Fälle ein, wird das Amplitudenverhältnis $F_k$ gleich null gesetzt.

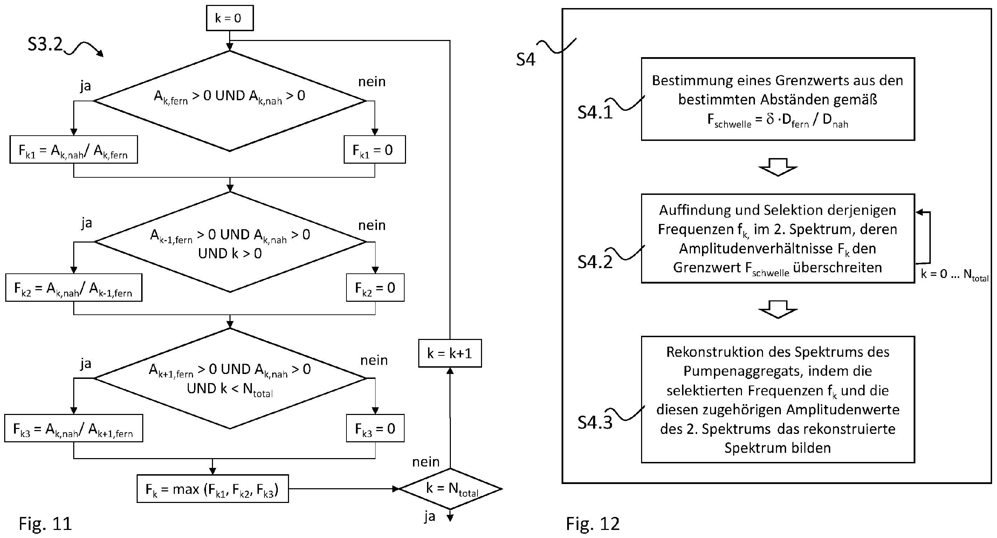

Ein gleichzeitiges Eintreten mehrerer der genannten Fälle a), b) und c) ist aufgrund der erfolgten Selektion der dominanten Frequenzen in den Frequenzspektren des ersten und zweiten Audiosignals unwahrscheinlich. Es können aber auch Regeln für eine Fall-Präferenz bei einem gleichzeitigen Eintreten mehrerer Fälle definiert werden. Eine solche Regel ist beispielhaft in Figur 11 verwendet, die die Einzelschritte einer alternativen Implementierung von Schritt S3 in einem Ablaufdiagramm zeigt.

Gegenüber der Implementierung von Schritt S3 gemäß Figur 10 werden die drei genannten Bedingungen hier nicht alternativ wie in Figur 10, sondern kumulativ geprüft, indem sowohl im Fall "ja", als auch im Fall "nein" einer Bedingung die nächste Bedingung geprüft wird, wobei die Reihenfolge hier grundsätzlich egal ist.

Um die Prüfung zu ermöglichen, ob zwei oder gar alle drei Fälle a), b) und c) gleichzeitig erfüllt sind, wird hier nicht nur ein einziges Amplitudenverhältnis $F_k$ berechnet, sondern für jeden Fall a), b) und c) ein eigenes Verhältnis $F_{k1}$, $F_{k2}$, $F_{k3}$. Durch eine Prüfung, welches dieser Verhältnisse $F_{k1}$, $F_{k2}$, $F_{k3}$ größer null ist, kann festgestellt werden, welche Fälle kumuliert vorlagen. Somit kann dann eine Prioritätenregelung angewendet werden, die regelt, welches Verhältnis $F_{k1}$, $F_{k2}$, $F_{k3}$ in diesem Fall als das gesuchte Verhältnis $F_k$ verwendet wird. In Figur 11 ist die Prioritätenregelung derart, dass von den Verhältnissen $F_{k1}$, $F_{k2}$, $F_{k3}$ dasjenige als gesuchtes Verhältnis $F_k$ verwendet wird, das am größten ist.

Während die Ausführungsvarianten in den Figuren 10 und 11 nur einen spektralen Offset in Höhe von einer Frequenzauflösung $1 \cdot \Delta f$ d.h. eine Frequenzverschiebung um einen einzigen Indexwert +/- 1 berücksichtigen, kann in nicht dargestellten Alternativen auch eine spektrale Verschiebung um $2 \cdot \Delta f$, d.h. zwei Indexwerte +/- 2, und gegebenenfalls um $3 \cdot \Delta f$, d.h. drei Indexwert +/- 3 untersucht werden, so dass weitere Fälle hinzukommen. Je höher die Auflösung $\Delta f$ gewählt ist, umso höher ist die Wahrscheinlichkeit, dass ein bestimmter Peak im Fernspektrum um ein, zwei oder sogar drei Indizes k verschoben ist.

Sind in Schritt S3 die Verhältnisse $F_k$ der Amplituden aller zueinander korrespondierenden Frequenzen $f_k$ in dem ersten und zweiten Audiosignal bestimmt, folgt in Schritt S4 die Rekonstruktion des nebengeräuschfreien Spektrums 50 der Hauptschallquelle $S_{haupt}$, d.h. des Pumpenaggregats 1. Dies erfolgt durch einen Vergleich der Amplitudenverhältnisse $F_k$ mit einem Grenzwert $F_{schwelle}$, der unter Berücksichtigung eines Abstandsgesetzes aus den in den Schritten S1.2 und S1.4. ermittelten Abständen $D_{nah}$, $D_{fern}$ berechnet wird. Die Einzelschritte der Rekonstruktionsmethode von Schritt S4 zeigt Figur 12.

Dabei erfolgt zunächst in Schritt S4.1 die Bestimmung des Grenzwerts $F_{schwelle}$ aus den bestimmten Abständen gemäß der Berechnungsvorschrift

$$F_{schwelle} = \delta \cdot D_{fern} / D_{nah}.$$

Der Grenzwert $F_{schwelle}$ wird also aus dem Verhältnis der Abstände $D_{fern}$, $D_{nah}$ zwischen der jeweiligen Messposition $P_{fern}$, $P_{nah}$ und der Hauptschallquelle $S_{haupt}$ bestimmt, genauer gesagt aus dem Verhältnis des ersten Abstands $D_{fern}$ der Fernmessung zum zweiten Abstand $D_{nah}$ der Nahmessung.

Die Berechnungsvorschrift spiegelt das Abstandsgesetz p - 1/r wider, wonach sich bei Schalldruckwerten p, wie sie der akustische Sensor 12 aufnimmt bzw. aufgenommen hat, die Amplituden umgekehrt proportional zum Abstand r des Sensors 12 zur Schallquelle ändern. Dieser Umstand wird nun gezielt genutzt, um die Hauptschallquelle $S_{haupt}$ von der anderen Schallquelle $S_{neben}$ zu separieren.

Das Verhältnis $D_{fern}$ zu $D_{nah}$ wird hier noch mit einem Faktor $\delta$ gewichtet, der zwischen 0,8 und 1 liegt, um eine gewisse Toleranz bei der Beurteilung zu erreichen, ob das Abstandsgesetz für eine bestimmte Frequenz erfüllt ist.

In Schritt S4.2 erfolgt dann die Auffindung und Selektion derjenigen Frequenzen $f_k$, deren Amplitudenverhältnisse $F_k$ den Grenzwert $F_{schwelle}$ überschreiten. Hierzu wird für jede Frequenz $f_k$ (mit k=0 bis $N_{total}$) geprüft, ob das zu dieser Frequenz $f_k$ ermittelte und ihr somit zugeordnete Amplitudenverhältnis $F_k$ den Grenzwert $F_{Schwelle}$ überschreitet. Ist dies der Fall, so ist diese Frequenz $f_k$ Teil des Frequenzspektrums der Hauptschallquelle $S_{haupt}$ und wird für den nächsten Schritt S4.3. selektiert. Liegt das Frequenzverhältnis $F_k$ dagegen unter dem Grenzwert $F_{Schwelle}$, so ist diese Frequenz $f_k$ Teil des Frequenzspektrums einer Nebenschallquelle $S_{neben}$ und wird ignoriert.

In Schritt S4.3 erfolgt schließlich die Extrahierung des Spektrums der Hauptschallquelle $S_{haupt}$ aus dem kombinierten Spektrum des zweiten Audiosignals. Mit anderen Worten wird eine Rekonstruktion des Spektrums 50 des Pumpenaggregats 1 durchgeführt, indem die aufgefundenen Frequenzen $f_k$ selektiert werden und samt der diesen zugehörigen Amplitudenwerten des Spektrums 40 des zweiten Audiosignals das rekonstruierte Spektrum 50 bilden. Alternativ könnte hier auch das Spektrum 30 des ersten Audiosignals verwendet werden, jedoch hat das Spektrum 40 des zweiten Audiosignals den Vorteil, dass die Amplituden dort größer sind.

Die Rekonstruktion kann praktischerweise dadurch erfolgen, dass die selektierten Frequenzen aus dem kombinierten Spektrum 40 für die nahe Messposition $P_{nah}$ "kopiert" und in ein noch leeres Spektrum "geschrieben" werden, wodurch das rekonstruierte Spektrum 50 entsteht. Alternativ kann umgekehrt vorgegangen werden, indem in dem Frequenzspektrum 40 des zweiten Audiosignals die Amplituden derjenigen Frequenzen $f_k$ zu null gesetzt werden, bei denen das zugeordnete Amplitudenverhältnis $F_k$ unter dem Grenzwert $F_{Schwelle}$ liegt. Das rekonstruierte Spektrum 50 entspricht einer Näherung des tatsächlichen Spektrums der Hauptschallquelle $S_{haupt}$.

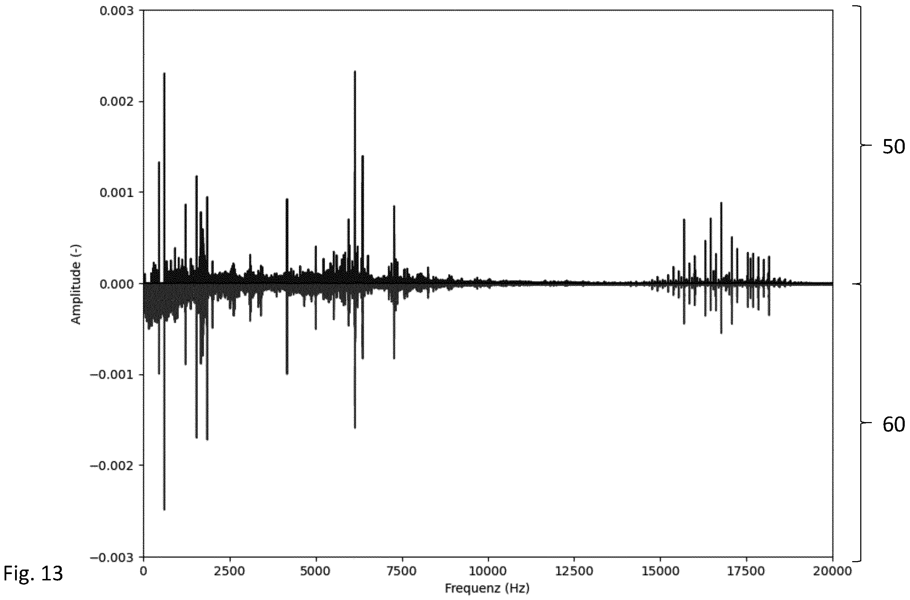

Figur 13 zeigt einen Vergleich des rekonstruierten Spektrums 50 der Hauptschallquelle $S_{haupt}$ mit dem originalen Spektrum 60 der Hauptschallquelle $S_{haupt}$ bzw. des Pumpenaggregats 1 in einem gemeinsamen Frequenzdiagramm, wobei die Amplitudenwerte des originalen Spektrums 60 zu diesem Zweck mit einem negativen Vorzeichen versehen sind, so dass das Originalspektrum 60 in der unteren Hälfte des Diagramms und das rekonstruierte Spektrum 50 in der oberen Hälfte des Diagramms wiedergegeben ist.

Es sei darauf hingewiesen, dass die vorstehende Beschreibung lediglich beispielhaft zum Zwecke der Veranschaulichung gegeben ist und den Schutzbereich der Erfindung keineswegs einschränkt. Merkmale der Erfindung, die als "kann", "beispielhaft", "bevorzugt", "optional", "ideal", "vorteilhaft", "gegebenenfalls", "geeignet" oder dergleichen angegeben sind, sind als rein fakultativ zu betrachten und schränken ebenfalls den Schutzbereich nicht ein, welcher ausschließlich durch die Ansprüche festgelegt ist. Die Erfindung wird durch die Reichweite der Ansprüche definiert.

Obgleich die vorstehende Erfindungsbeschreibung eine Vielzahl körperlicher, unkörperlicher oder verfahrensgegenständlicher Merkmale in Bezug zu einem oder mehreren konkreten Ausführungsbeispiel(en) nennt, so können diese Merkmale auch isoliert von dem konkreten Ausführungsbeispiel verwendet werden, jedenfalls soweit sie nicht das zwingende Vorhandensein weiterer Merkmale erfordern. Umgekehrt können diese in Bezug zu einem oder mehreren konkreten Ausführungsbeispiel(en) genannten Merkmale beliebig miteinander sowie mit weiteren offenbarten oder nicht offenbarten Merkmalen von gezeigten oder nicht gezeigten Ausführungsbeispielen kombiniert werden, jedenfalls soweit sich die Merkmale nicht gegenseitig ausschließen oder zu technischen Unvereinbarkeiten führen.

**Patentansprüche**

1. Verfahren zur Untersuchung des Zustands wenigstens einer Komponente (2, 3, 4) eines Pumpenaggregats (1) insbesondere zur Bestimmung der Drehzahl des Pumpenaggregats oder bezüglich eines Fehlers durch Analyse des von dem Pumpenaggregat (1) abgegebenen Luftschalls, umfassend das Aufzeichnen wenigstens eines ersten Audiosignals im Betrieb des Pumpenaggregats (1) an einem ersten geometrischen Ort ($P_{fern}$) mit einem ersten Abstand ($D_{fern}$) zum Pumpenaggregat (1), und das Aufzeichnen eines zweiten Audiosignals im Betrieb des Pumpenaggregats (1) an einem zweiten geometrischen Ort ($P_{nah}$) mit einem zweiten Abstand ($D_{nah}$) zum Pumpenaggregat (1), der geringer ist, als der erste Abstand ($D_{fern}$), **dadurch gekennzeichnet, dass** die Bestimmung des Zustands des Pumpenaggregats (1) durch Analyse eines von Nebengeräuschen wenigstens einer Nebenschallquelle (1a) bereinigten Signals (50) des Pumpenaggregats (1) erfolgt, das durch einen Vergleich von Amplitudenwerten des ersten und zweiten Audiosignals rekonstruiert wird.

2. Verfahren nach Anspruch 1, **dadurch gekennzeichnet, dass** die Amplitudenwerte solche von aus dem ersten und zweiten Audiosignal ermittelten Spektralanteilen sind.

3. Verfahren nach Anspruch 1 oder 2, **dadurch gekennzeichnet, dass** zur Eliminierung der Nebengeräusche in dem ersten und/ oder zweiten Audiosignal jeweils ein Spektrum (30, 40) des ersten und zweiten Audiosignals ermittelt und Amplitudenwerte von zueinander korrespondierenden Spektralanteilen ($f_k$, $f_{k-1}$, $f_{k+1}$) der beiden Spektren (30, 40) oder davon abgeleiteter Spektren zueinander ins Verhältnis ($F_k$) gesetzt werden, und dass das rekonstruierte Signal (50) aus den Amplitudenwerten derjenigen Spektralanteilen ($f_k$) eines der beiden Spektren (30, 40) oder der davon abgeleiteten Spektren gebildet wird, deren Verhältnis ($F_k$) jenseits eines bestimmten Grenzwerts ($F_{Schwelle}$) liegen.

4. Verfahren nach Anspruch 3, **dadurch gekennzeichnet, dass** die Spektren (30, 40) Frequenzspektren und die Spektralanteile Frequenzen sind.

5. Verfahren nach Anspruch 3 oder 4, **dadurch gekennzeichnet, dass** das rekonstruierte Signal (50) aus den Amplitudenwerten der Spektralanteile ($f_k$) des Spektrums (40) des zweiten Audiosignals oder des davon abgeleiteten Spektrums gebildet wird.

6. Verfahren nach Anspruch 3 bis 5, **dadurch gekennzeichnet, dass** aus jedem der beiden Spektren (30, 40) zunächst eine Anzahl dominierende Spektralanteile ($f_k$) bestimmt werden und diese selektiert werden, wobei diese dominierenden Spektralanteile ($f_k$) samt ihren Amplitudenwerten das jeweilige abgeleitete Spektrum bilden, und dass anschließend das Insverhältnissetzen der Amplitudenwerte erfolgt.

7. Verfahren nach einem der Ansprüche 3 bis 6, **dadurch gekennzeichnet, dass** die beiden Spektren (30, 40) in Intervalle eingeteilt werden und eine Anzahl dominierende Spektralanteile ($f_k$) für jedes Intervall bestimmt werden und diese selektiert werden.

8. Verfahren nach Anspruch 6 oder 7, **dadurch gekennzeichnet, dass** die Anzahl vorgegeben ist.

9. Verfahren nach Anspruch 6, 7 oder 8, **dadurch gekennzeichnet, dass** die Bestimmung der dominierenden Spektralanteile durch Anwendung eines Sortieralgorithmusses erfolgt, insbesondere derart, dass

a) zunächst alle Spektralanteile ($f_k$) nacheinander daraufhin geprüft werden, welcher Spektralanteile ($f_k$) die höchste Amplitude besitzt,
b) anschließend die verbleibenden Spektralanteile ($f_k$) nacheinander daraufhin geprüft werden, welcher dieser Spektralanteile ($f_k$) die höchste Amplitude besitzt, und

c) Schritt b) $N_{peak}$ -2 Mal wiederholt wird, wobei $N_{peak}$ die Anzahl dominierender Spektralanteile ($f_k$) ist.

10. Verfahren nach einem der vorherigen Ansprüche 3 bis 9, **dadurch gekennzeichnet, dass** die Bildung der Amplitudenverhältnisse derart erfolgt, dass für einen Spektralanteil ($f_k$) ein Verhältnis ($F_k$) des Amplitudenwerts des Spektralanteils ($f_k$) im Spektrum (40) des zweiten Audiosignals oder im davon abgeleiteten Spektrum zum Amplitudenwert des korrespondierenden Spektralanteils ($f_k, f_{k-1}, f_{k+1}$) im Spektrum (30) des ersten Audiosignals oder im davon abgeleiteten Spektrum berechnet wird.

11. Verfahren nach Anspruch 10, **dadurch gekennzeichnet, dass** für einen Spektralanteil $f_k$ das Verhältnis $F_k$ des Amplitudenwerts dieses Spektralanteils $f_k$ im Spektrum (40) des zweiten Audiosignals oder im davon abgeleiteten Spektrum zum Amplitudenwert desselben Spektralanteils $f_k$ im Spektrum (30) des ersten Audiosignals oder im davon abgeleiteten Spektrum berechnet wird, wobei dies insbesondere nur dann erfolgt, wenn beide genannten Amplitudenwerte größer null sind.

12. Verfahren nach Anspruch 10 oder 11, **dadurch gekennzeichnet, dass** bei der Bildung der Amplitudenverhältnisse eine Offset-Korrektur durchgeführt wird, indem

   a) für den Spektralanteil $f_k$ das Verhältnis $F_k$ des Amplitudenwerts des Spektralanteils $f_k$ im Spektrum (40) des zweiten Audiosignals oder im davon abgeleiteten Spektrum zum Amplitudenwert desselben Spektralanteils $f_k$ im Spektrum (30) des ersten Audiosignals oder im davon abgeleiteten Spektrum berechnet wird, wenn beide genannten Amplitudenwerte größer null sind, und/ oder
   b) für den Spektralanteil $f_k$ das Verhältnis $F_k$ des Amplitudenwerts des Spektralanteils $f_k$ im Spektrum (40) des zweiten Audiosignals oder im davon abgeleiteten Spektrum zum Amplitudenwert des vorherigen Spektralanteils $f_{k-1}$ im Spektrum (30) des ersten Audiosignals oder im davon abgeleiteten Spektrum berechnet wird, wenn beide genannten Amplitudenwerte größer null sind, und/ oder
   c) für den Spektralanteil $f_k$ das Verhältnis $F_k$ des Amplitudenwerts des Spektralanteils $f_k$ im Spektrum (40) des zweiten Audiosignals oder im davon abgeleiteten Spektrum zum Amplitudenwert des nächsten Spektralanteils $f_{k+1}$ im Spektrum (30) des ersten Audiosignals oder im davon abgeleiteten Spektrum berechnet wird, wenn beide genannten Amplitudenwerte größer null sind.

13. Verfahren nach Anspruch 10, 11 oder 12, **dadurch gekennzeichnet, dass** für alle Spektralanteile ($f_k$) nacheinander geprüft wird, bei welchem Spektralanteil ($f_k$) ein ermitteltes Amplitudenverhältnis über dem Grenzwert ($F_{Schwelle}$) liegt und dass diejenigen Spektralanteile ($f_k$), bei denen dies der Fall ist, samt den diesen Spektralanteilen ($f_k$) zugeordneten Amplitudenwerten aus dem Spektrum (40) des zweiten Audiosignals das rekonstruierte Signal (50) bilden.

14. Verfahren nach einem der Ansprüche 3 bis 13, **dadurch gekennzeichnet, dass** der Grenzwert ($F_{Schwelle}$) unter Berücksichtigung eines Verhältnisses der beiden Abstände ($D_{fern}$, $D_{nah}$) zueinander festgelegt, insbesondere berechnet wird.

15. Verfahren nach einem der vorherigen Ansprüche, **dadurch gekennzeichnet, dass** der erste geometrische Ort ($P_{fern}$), der zweite geometrische Ort ($P_{nah}$) und das Pumpenaggregat (10) auf einer geraden Messlinie (20) liegen oder dass der erste geometrische Ort ($P_{fern}$) und der zweite geometrische Ort ($P_{nah}$) auf einer Kreisbahn um die Nebenschallquelle (1a) liegen.

16. Verfahren nach einem der vorherigen Ansprüche, **dadurch gekennzeichnet, dass** mit Hilfe eines akustischen Sensors (12) der Schalldruck gemessen und das erste und zweite Audiosignal jeweils den Schalldruck-Zeit-Verlauf des Sensors (12) bilden.

17. Verfahren nach einem der vorherigen Ansprüche, **dadurch gekennzeichnet, dass** der zweite Abstand ($D_{nah}$) die Hälfte des ersten Abstands ($D_{fern}$) beträgt.

18. Verfahren nach einem der vorherigen Ansprüche, **dadurch gekennzeichnet, dass** die Abstände ($D_{fern}$, $D_{nah}$) jeweils durch eine optische Messung ermittelt werden, indem das Pumpenaggregat (1) mit Hilfe eines optischen Sensors (17), jeweils vom ersten und zweiten geometrischen Ort ($P_{fern}$, $P_{nah}$) aus erfasst wird, insbesondere, dass es mittels einer Kamera in wenigstens einem Bild visuell erfasst wird und dieses Bild jeweils, vorzugsweise in Echtzeit, ausgewertet wird.

19. Softwareapplikation für ein mobiles Untersuchungsgerät (10) mit einer Anzeige (16), wenigstens einem Bedienelement und einem akustischen Sensor (12) und optional einem optischen Sensor (17), umfassend programmtechnische Anweisungen, die, wenn sie von dem Untersuchungsgerät (10) ausgeführt werden, bewirken, dass das Untersuchungsgerät (10) das Verfahren nach einem der Ansprüche 1 bis 18 ausführt.

20. Computerlesbares Speichermedium mit einer Softwareapplikation gemäß Anspruch 19.

21. Mobiles Untersuchungsgerät (10) mit einer Anzeige (16), wenigstens einem Bedienelement und einem akustischen Sensor (12) zur Vornahme einer Audioaufnahme und optional einem optischen Sensor (17), **dadurch gekennzeichnet, dass** das Untersuchungsgerät (10) eingerichtet ist, das Verfahren nach einem der Ansprüche 1 bis 18 auszuführen.

**Claims**

1. Method for analysing the state of at least one component (2, 3, 4) of a pump assembly (1), notably to determine the rotational speed of the pump assembly or with regard to an error through analysis of the airborne sound emitted by the pump assembly (1), comprising the recording of at least a first audio signal during operation of the pump assembly (1) at a first geometric location ($P_{far}$) and at a first distance ($D_{far}$) from the pump assembly (1), and the recording of a second audio signal during operation of the pump assembly (1) at a second geometric location ($P_{near}$) and at a second distance ($D_{near}$) from the pump assembly (1), which is less than the first distance ($D_{far}$), **characterised by** the state of the pump assembly (1) being determined through the analysis of a signal (50) of the pump assembly (1) corrected for the ambient noise of at least one secondary sound source (1a), which is reconstructed through a comparison of amplitude values of the first and second audio signals.

2. Method according to claim 1, **characterised by** the amplitude values being spectral components determined from the first and second audio signals.

3. Method according to claim 1 or 2, **characterised by** determining respectively one spectrum (30, 40) of the first and second audio signals and forming a ratio of amplitude values of corresponding spectral components ($f_k$, $f_{k-1}$, $f_{k+1}$) of the two spectra (30, 40) or spectra derived from them ($F_k$), and by forming the reconstructed signal (50) from the amplitude values of those spectral components ($f_k$) of one of the two spectra (30, 40) or spectra derived from them for which the ratio ($F_k$) lies beyond a certain established limit value ($F_{threshold}$), in order to eliminate the ambient noise in the first and/or second audio signal.

4. Method according to claim 3, **characterised by** the spectra (30, 40) being frequency spectra and the spectral components being frequencies.

5. Method according to claim 3 or 4, **characterised by** the reconstructed signal (50) being formed from the amplitude values of the spectral components ($f_k$) of the spectrum (40) of the second audio signal or a spectrum derived from the same.

6. Method according to claims 3 through 5, **characterised by** a number of dominant spectral components ($f_k$) first being determined from each of the two spectra (30, 40) and by these being selected, in which these dominant spectral components ($f_k$) with their amplitude values form the respective derived spectrum, and by a ratio of the amplitude values subsequently being formed.

7. Method according to one of the claims 3 through 6, **characterised by** the two spectra (30, 40) being divided into intervals and a number of dominant spectral components ($f_k$) being determined for each interval and these being selected.

8. Method according to claim 6 or 7, **characterised by** the number being specified.

9. Method according to claim 6, 7 or 8, **characterised by** the dominant spectral components being determined through the application of a sorting algorithm, notably in such a manner that

  a) all spectral components ($f_k$) are initially checked sequentially to determine which spectral component ($f_k$) has the highest amplitude,
  b) subsequently, the remaining spectral components ($f_k$) are checked sequentially to determine which of these

spectral components ($f_k$) has the highest amplitude, and

c) step b) is repeated $N_{peak}$ -2 times, where $N_{peak}$ is the number of dominant spectral components ($f_k$).

10. Method according to one of the preceding claims 3 through 9, **characterised by** the amplitude ratios being formed in such a manner that, for one spectral component ($f_k$), a ratio ($F_k$) of the amplitude value of the spectral component ($f_k$) in the spectrum (40) of the second audio signal or in the spectrum derived from that to the amplitude value of the corresponding spectral component ($f_k, f_{k-1}, f_{k+1}$) in the spectrum (30) of the first audio signal or in the spectrum derived from that is calculated.

11. Method according to claim 10, **characterised by** the ratio $F_k$ of the amplitude value of the spectral component $f_k$ in the spectrum (40) of the second audio signal or in the spectrum derived from that to the amplitude value of the same spectral component $f_k$ in the spectrum (30) of the first audio signal or in the spectrum derived from that being calculated for a spectral component $f_k$, with this taking place in particular only when both aforementioned amplitude values are greater than zero.

12. Method according to claim 10 or 11, **characterised by** an offset correction being performed in forming the amplitude ratios, by

a) for the spectral component $f_k$, calculating the ratio $F_k$ of the amplitude value of the spectral component $f_k$ in the spectrum (40) of the second audio signal or in the spectrum derived from that to the amplitude value of the same spectral component $f_k$ in the spectrum (30) of the first audio signal or in the spectrum derived from that, when both aforementioned amplitude values are greater than zero, and/or

b) for the spectral component $f_k$, calculating the ratio $F_k$ of the amplitude value of the spectral component $f_k$ in the spectrum (40) of the second audio signal or in the spectrum derived from that to the amplitude value of the previous spectral component $f_{k-1}$ in the spectrum (30) of the first audio signal or in the spectrum derived from that, when both aforementioned amplitude values are greater than zero, and/or

c) for the spectral component $f_k$, calculating the ratio $F_k$ of the amplitude value of the spectral component $f_k$ in the spectrum (40) of the second audio signal or in the spectrum derived from that to the amplitude value of the next spectral component $f_{k+1}$ in the spectrum (30) of the first audio signal or in the spectrum derived from that, when both aforementioned amplitude values are greater than zero.

13. Method according to claim 10, 11 or 12, **characterised by** sequentially checking, for all spectral components ($f_k$), for which spectral component ($f_k$) a determined amplitude ratio exceeds the limit value ($F_{threshold}$) and by those spectral components ($f_k$) where this is the case, along with the amplitude values assigned to these spectral components ($f_k$) from the spectrum (40) of the second audio signal, forming the reconstructed signal (50).

14. Method according to one of the claims 3 through 13, **characterised by** the limit value ($F_{threshold}$) being established, notably calculated, under consideration of a ratio of the two distances ($D_{far}$, $D_{near}$) to each other.

15. Method according to one of the preceding claims, **characterised by** the first geometric location ($P_{far}$), the second geometric location ($P_{near}$) and the pump assembly (10) lying on a straight measuring line (20) or the first geometric location ($P_{far}$) and the second geometric location ($P_{near}$) lying on a circular path around the secondary sound source (1a).

16. Method according to one of the preceding claims, **characterised by** the sound pressure level being measured using an acoustic sensor (12) and the first and second audio signal respectively forming the sound pressure level/time gradient of the sensor (12).

17. Method according to one of the preceding claims, **characterised by** the second distance ($D_{near}$) being half the first distance ($D_{far}$).

18. Method according to one of the preceding claims, **characterised by** the distances ($D_{far}$, $D_{near}$) respectively being determined by an optical measurement, in which the pump assembly (1) is recorded using an optical sensor (17), respectively from the first and second geometric locations ($P_{far}$, $P_{near}$), notably recorded visually in at least one image using a camera, and this image is respectively analysed, preferably in real time.

19. Software application for a mobile analysis device (10) with a display (16), at least one control element and an acoustic sensor (12) and optionally an optical sensor (17), comprising program instructions that, when they are executed by the analysis device (10), cause the analysis device (10) to execute the method according to one of the claims 1 through 18.

20. Machine-readable storage medium with a software application according to claim 19.

21. Mobile analysis device (10) with a display (16), at least one control element and an acoustic sensor (12) to record audio and optionally an optical sensor (17), **characterised by** the analysis device (10) being configured to execute the method according to one of the claims 1 through 18.

**Revendications**

1. Procédé d'examen de l'état d'au moins un composant (2, 3, 4) d'un groupe motopompe (1), en particulier pour déterminer la vitesse de rotation du groupe motopompe ou concernant un défaut par analyse du bruit aérien émis par le groupe motopompe (1), comprenant l'enregistrement d'au moins un premier signal audio pendant le fonctionnement du groupe motopompe (1) à un premier endroit géométrique ($P_{\text{éloigné}}$) à une première distance ($D_{\text{éloigné}}$) du groupe motopompe (1), et l'enregistrement d'un second signal audio pendant le fonctionnement du groupe de pompage (1) en un second lieu géométrique ($P_{\text{proche}}$) avec une seconde distance ($D_{\text{proche}}$) par rapport au groupe de pompage (1), inférieure à la première distance ($D_{\text{éloigné}}$), **caractérisé, en ce que** la détermination de l'état du groupe motopompe (1) s'effectue par analyse d'un signal (50) du groupe motopompe (1), épuré des bruits parasites d'au moins une source sonore parasite (1a), qui est reconstruit par comparaison des valeurs d'amplitude du premier et du deuxième signal audio.

2. Procédé selon la revendication 1, **caractérisé en ce que** les valeurs d'amplitude sont celles de composantes spectrales déterminées à partir des premier et deuxième signaux audio.

3. Procédé selon la revendication 1 ou 2, **caractérisé en ce que,** pour éliminer les bruits parasites dans le premier et/ou le second signal audio, on détermine respectivement un spectre (30, 40) du premier et du second signal audio et on détermine des valeurs d'amplitude de composantes spectrales ($f_k$, $f_{k-1}$, $f_{k+1}$) qui se correspondent des deux spectres (30, 40) ou des spectres qui en sont dérivés sont mis en rapport ($F_k$) les uns avec les autres, et **en ce que** le signal reconstruit (50) est formé à partir des valeurs d'amplitude des composantes spectrales ($f_k$) de l'un des deux spectres (30, 40) ou des spectres qui en sont dérivés, dont le rapport ($F_k$) se situe au-delà d'un seuil déterminé ($F_{\text{seuil}}$).

4. Procédé selon la revendication 3, **caractérisé en ce que** les spectres (30, 40) sont des spectres de fréquences et les composantes spectrales sont des fréquences.

5. Procédé selon la revendication 3 ou 4, **caractérisé en ce que** le signal reconstruit (50) est formé à partir des valeurs d'amplitude des composantes spectrales ($f_k$) du spectre (40) du second signal audio ou du spectre qui en est dérivé.

6. Procédé selon les revendications 3 à 5, **caractérisé en ce qu'à** partir de chacun des deux spectres (30, 40), on détermine d'abord un certain nombre de composantes spectrales dominantes ($f_k$) et on les sélectionne, sachant que ces composantes spectrales dominantes ($f_k$) avec leurs valeurs d'amplitude forment le spectre dérivé respectif, et **en ce que** l'on effectue ensuite la mise en rapport des valeurs d'amplitude.

7. Procédé selon l'une des revendications 3 à 6, **caractérisé en ce qu'**on divise les deux spectres (30, 40) en intervalles, qu'on détermine un nombre de composantes spectrales dominantes ($f_k$) pour chaque intervalle et qu'on les sélectionne.

8. Procédé selon la revendication 6 ou 7, **caractérisé en ce que** le nombre est prédéfini.

9. Procédé selon la revendication 6, 7 ou 8, **caractérisé en ce que** la détermination des composantes spectrales dominantes s'effectue par application d'un algorithme de tri, en particulier de telle sorte que

a) toutes les composantes spectrales ($f_k$) sont d'abord vérifiées l'une après l'autre pour savoir quelle composante spectrale ($f_k$) a l'amplitude la plus élevée,
b) puis les composantes spectrales ($f_k$) restantes sont vérifiées l'une après l'autre pour savoir laquelle de ces composantes spectrales ($f_k$) a l'amplitude la plus élevée et
c) l'étape b) $N_{\text{pic}}$ est répétée 2 fois, sachant que $N_{\text{pic}}$ est le nombre de composantes spectrales dominantes ($f_k$).

**10.** Procédé selon l'une des revendications précédentes 3 à 9, **caractérisé en ce que** la formation des rapports d'amplitude est effectuée de telle sorte que, pour une composante spectrale ($f_k$), un rapport ($F_k$) entre la valeur d'amplitude de la composante spectrale ($f_k$) dans le spectre (40) du second signal audio ou dans le spectre qui en est dérivé et la valeur d'amplitude de la composante spectrale correspondante ($f_k, f_{k-1}, f_{k+1}$) est calculé dans le spectre (30) du premier signal audio ou dans le spectre qui en est dérivé.

**11.** Procédé selon la revendication 10, **caractérisé en ce que,** pour une composante spectrale $f_k$, on calcule le rapport $F_k$ entre la valeur d'amplitude de cette composante spectrale $f_k$ dans le spectre (40) du second signal audio ou dans le spectre qui en est dérivé et la valeur d'amplitude de la même composante spectrale $f_k$ dans le spectre (30) du premier signal audio ou dans le spectre qui en est dérivé, sachant que ceci n'est notamment effectué que si les deux valeurs d'amplitude mentionnées sont supérieures à zéro.

**12.** Procédé selon la revendication 10 ou 11, **caractérisé en ce que,** lors de la formation des rapports d'amplitude, on effectue une correction de décalage en

a) calculant pour la composante spectrale $f_k$ le rapport $F_k$ entre la valeur d'amplitude de la composante spectrale $f_k$ dans le spectre (40) du second signal audio ou dans le spectre qui en est dérivé et la valeur d'amplitude de la même composante spectrale $f_k$ dans le spectre (30) du premier signal audio ou dans le spectre qui en est dérivé, lorsque les deux valeurs d'amplitude mentionnées sont supérieures à zéro, et/ou

b) en calculant pour la composante spectrale $f_k$, le rapport $F_k$ de la valeur d'amplitude de la composante spectrale $f_k$ dans le spectre (40) du second signal audio ou dans le spectre qui en est dérivé à la valeur d'amplitude de la composante spectrale précédente $f_{k-1}$ dans le spectre (30) du premier signal audio ou dans le spectre qui en est dérivé, lorsque les deux valeurs d'amplitude mentionnées sont supérieures à zéro, et/ou

c) en calculant pour la composante spectrale $f_k$, le rapport Fk entre la valeur d'amplitude de la composante spectrale $f_k$ dans le spectre (40) du second signal audio ou dans le spectre qui en est dérivé et la valeur d'amplitude de la composante spectrale suivante $f_{k+1}$ dans le spectre (30) du premier signal audio ou dans le spectre qui en est dérivé, lorsque les deux valeurs d'amplitude mentionnées sont supérieures à zéro.

**13.** Procédé selon la revendication 10, 11 ou 12, **caractérisé en ce que** pour toutes les composantes spectrales ($f_k$), on vérifie successivement pour quelle composante spectrale ($f_k$) un rapport d'amplitude déterminé est supérieur à la valeur limite ($F_{seuil}$) et **en ce que** les composantes spectrales ($f_k$) pour lesquelles c'est le cas forment, avec les valeurs d'amplitude associées à ces composantes spectrales ($f_k$), le signal reconstruit (50) à partir du spectre (40) du second signal audio.

**14.** Procédé selon l'une des revendications 3 à 13, **caractérisé en ce que** la valeur limite ($F_{seuil}$) est fixée, notamment calculée, en tenant compte d'un rapport entre les deux distances ($D_{éloigné}$, $D_{proche}$).

**15.** Procédé selon l'une des revendications précédentes, **caractérisé en ce que** le premier lieu géométrique ($P_{éloigné}$), le second lieu géométrique ($P_{proche}$) et le groupe motopompe (10) sont situés sur une ligne de mesure droite (20) ou **en ce que** le premier lieu géométrique ($P_{éloigné}$) et le second lieu géométrique ($P_{proche}$) sont situés sur une trajectoire circulaire autour de la source de bruit secondaire (1a).

**16.** Procédé selon l'une des revendications précédentes, **caractérisé en ce que** la pression acoustique est mesurée par un capteur acoustique (12) et **en ce que** le premier et le second signal audio forment respectivement l'évolution de la pression acoustique en fonction du temps du capteur (12).

**17.** Procédé selon l'une quelconque des revendications précédentes, **caractérisé en ce que** la seconde distance ($D_{proche}$) est égale à la moitié de la première distance ($D_{éloigné}$).

**18.** Procédé selon l'une des revendications précédentes, **caractérisé en ce que** les distances ($D_{éloigné}$, $D_{proche}$) sont déterminées respectivement par une mesure optique, **en ce que** le groupe motopompe (1) est détecté par un capteur optique (17), respectivement à partir du premier et du second lieu géométrique ($P_{éloigné}$, $P_{proche}$), en particulier **en ce qu'**il est détecté visuellement au moyen d'une caméra dans au moins une image et que cette image est évaluée respectivement, de préférence en temps réel.

**19.** Application logicielle pour un appareil d'examen mobile (10) avec un affichage (16), au moins un élément de commande et un capteur acoustique (12) et éventuellement un capteur optique (17), comprenant des instructions de technique de programme qui, lorsqu'elles sont exécutées par l'appareil d'examen (10), font que l'appareil d'examen (10) exécute le procédé selon l'une des revendications 1 à 18.

20. Support de stockage lisible par ordinateur avec une application logicielle selon la revendication 19.

21. Appareil d'examen mobile (10) avec un affichage (16), au moins un élément de commande et un capteur acoustique (12) pour effectuer un enregistrement audio et, en option, un capteur optique (17), **caractérisé en ce que** l'appareil d'examen (10) est conçu pour exécuter le procédé selon l'une des revendications 1 à 18.

Fig. 1

Fig. 2

Fig. 3

Fig. 4

Fig. 5

**S1**

- **S1.1** Visuelle Bestimmung des Abstands $D_{fern}$ zum Pumpenaggregat
- **S1.2** Aufzeichnen eines ersten Audiosignals bei $P_{fern}$
- **S1.3** Visuelle Bestimmung des Abstands $D_{nah}$ zum Pumpenaggregat
- **S1.4** Aufzeichnen eines zweiten Audiosignals bei $P_{nah}$

Fig. 7

- **S1** Aufzeichnen des Schalldrucks des Pumpenaggregats in einem ersten Audiosignal bei $P_{fern}$ und in einem zweiten Audiosignal bei $P_{nah}$
- **S2** Berechnung eines Frequenzspektrums zu jedem der Audiosignale samt Nachbereitung
- **S3** Auswertung der Audiosignale im Frequenzbereich durch Bildung von Amplitudenverhältnissen
- **S4** Rekonstruktion des von Nebengeräuschen bereinigten Spektrums des Pumpenaggregats
- **S5** Auswertung des bereinigten Spektrums des Pumpenaggregats

Fig. 6

EP 4 361 582 B1

S2a

S2b

S2

S2.1a ⟩ Berechnung des Frequenzspektrums des ersten Audiosignals

S2.1b ⟩ Berechnung des Frequenzspektrums des zweiten Audiosignals

⇩

⇩

S2.2a ⟩ Einteilung des 1. Frequenzspektrums in m Intervalle $I_x$, mit $x = 1 \dots m$

S2.2b ⟩ Einteilung des 2. Frequenzspektrums in m Intervalle $I_x$, mit $x = 1 \dots m$

⇩

⇩

S2.3a ⟩ Für jedes Intervall $I_x$: Identifikation derjenigen $N_{I,peak}$ Frequenzen in dem Intervall $I_x$, die die größten Amplitudenwerte haben    $x = 1 \dots m$

S2.3b ⟩ Für jedes Intervall $I_x$: Identifikation derjenigen $N_{I,peak}$ Frequenzen in dem Intervall $I_x$, die die größten Amplitudenwerte haben    $x = 1 \dots m$

⇩

⇩

S2.4a ⟩ Setze die Amplituden der übrigen Frequenzen in dem 1. Frequenzspektrum zu null

S2.4b ⟩ Setze die Amplituden der übrigen Frequenzen in dem 2. Frequenzspektrum zu null

Fig. 8

**Fig. 9**

S3

k = 0 … $N_{total}$

Für jede Frequenz $f_k$: Bildung des Verhältnisses $F_k$ der Amplitude $A_{k,nah}$ der Frequenz $f_k$ im 2. Frequenzspektrum zur Amplitude $A_{k,fern}$ der korrespondierenden Frequenz $f_k$ im 1. Frequenzspektrum

$$F_k = A_{k,nah} / A_{k,fern}$$

**Fig. 10**

S3

k = 0

$A_{k,fern} > 0$ UND $A_{k,nah} > 0$ — ja → $F_k = A_{k,nah} / A_{k,fern}$

nein →

$A_{k-1,fern} > 0$ UND $A_{k,nah} > 0$ UND k > 0 — ja → $F_k = A_{k,nah} / A_{k-1,fern}$

nein →

$A_{k+1,fern} > 0$ UND $A_{k,nah} > 0$ UND k < $N_{total}$ — ja → $F_k = A_{k,nah} / A_{k+1,fern}$

nein → $F_k = 0$

k = $N_{total}$ — nein → k = k+1 ; ja →

Bestimmung eines Grenzwerts aus den bestimmten Abständen gemäß
$F_{schwelle} = \delta \cdot D_{fern} / D_{nah}$

S4.1

Auffindung und Selektion derjenigen Frequenzen $f_k$, im 2. Spektrum, deren Amplitudenverhältnisse $F_k$ den Grenzwert $F_{schwelle}$ überschreiten

S4.2

Rekonstruktion des Spektrums des Pumpenaggregats, indem die selektierten Frequenzen $f_k$ und die diesen zugehörigen Amplitudenwerte des 2. Spektrums das rekonstruierte Spektrum bilden

S4.3

S4

$k = 0 \dots N_{total}$

Fig. 12

S3.2

$k = 0$

$A_{k,fern} > 0$ UND $A_{k,nah} > 0$

ja

nein

$F_{k1} = A_{k,nah} / A_{k,fern}$

$F_{k1} = 0$

$A_{k-1,fern} > 0$ UND $A_{k,nah} > 0$ UND k > 0

ja

nein

$F_{k2} = A_{k,nah} / A_{k-1,fern}$

$F_{k2} = 0$

$A_{k+1,fern} > 0$ UND $A_{k,nah} > 0$ UND k < $N_{total}$

ja

nein

$F_{k3} = A_{k,nah} / A_{k+1,fern}$

$F_{k3} = 0$

$F_k = \max(F_{k1}, F_{k2}, F_{k3})$

$k = k+1$

$k = N_{total}$

nein

ja

Fig. 11

Fig. 13

**EP 4 361 582 B1**

**IN DER BESCHREIBUNG AUFGEFÜHRTE DOKUMENTE**

**In der Beschreibung aufgeführte Patentdokumente**

- DE 102009022107 A1
- EP 1972793 A1
- EP 3563062 B1
- WO 2015197141 A1
- WO 2016059112 A
- EP 3242036 A1
- EP 2669707 A1
- WO 2015144775 A1
- US 20110025845 A1
- US 20210254962 A1
- US 20190340799 A1
- EP 3262499 B1
- US 10489033 B2